# EUROPEAN PATENT APPLICATION

(11) **EP 4 707 690 A1**
(43) Date of publication of application: **11.03.2026**
(21) Application number: 24865696.9
(22) Date of filing: 09.08.2024
(51) Int. Cl.: F24F 11/63, F24F 11/46, F24F 11/61, F24F 11/74, F24F 11/80, G06N 20/00, F24F 120/10

(54) **AIR CONDITIONER FOR PERFORMING POWER SAVING CONTROL, AND CONTROL METHOD THEREFOR**

(30) Priority: 13.09.2023 KR 20230122065; 22.03.2024 KR 20240039983
(71) Applicant: Samsung Electronics Co., Ltd., Suwon-si, Gyeonggi-do 16677 (KR)
(72) Inventor: HWANG, Jun, Suwon-si, Gyeonggi-do 16677 (KR); KIM, Donghyun, Suwon-si, Gyeonggi-do 16677 (KR); HONG, Jinwoo, Suwon-si, Gyeonggi-do 16677 (KR); CHO, Hyeongkyu, Suwon-si, Gyeonggi-do 16677 (KR); TAE, Sangjin, Suwon-si, Gyeonggi-do 16677 (KR); HUR, Jaehun, Suwon-si, Gyeonggi-do 16677 (KR)
(74) Representative: Walaski, Jan Filip
(86) International application number: PCT/KR2024/011905
(87) International publication number: WO 2025/058254

(57) **Abstract**

Provided is an air conditioner. The air conditioner includes a detection sensor. The air conditioner includes an air conditioning module configured to perform an air conditioning operation on a target space. The air conditioner includes a memory storing at least one instruction. The air conditioner includes at least one processor, comprising processing circuitry. At least one processor is configured to execute the at least one instruction to: detect a person in the target space using a sensor detection value of the detection sensor, and perform a power saving control operation to adjust at least one of wind strength or a set temperature of the air conditioning module, according to a power saving performing condition indicating a condition to perform a power saving control operation being satisfied, based on an absence time during which it is determined that a person is absent in the target space.

## Description

### TECHNICAL FIELD

The disclosure relates to an air conditioner for performing power saving control, a method of controlling an air conditioner, and a computer-readable recording medium having recorded thereon a program for performing, on a computer, the method of controlling an air conditioner.

### Background Art

Various types of air conditioners are widely used in an indoor space. As air conditioners require high power consumption, there is a demand for a method of decreasing power consumption of the air conditioners. An air conditioner may have various sensor, for example, a human detection sensor (e.g., a motion detection sensor), a temperature sensor, or the like. The air conditioner may control an environment of an air-conditioned space and may control an operation of the air conditioner, using the various sensors. The air conditioner may perform power saving control using the motion detect sensor. However, there is a problem by which power saving control is not effectively performed, according to an operation pattern of each user.

### Disclosure of Invention

### Solution to Problem

According to an aspect of an embodiment of the disclosure, provided is an air conditioner. The air conditioner includes: a detection sensor. Also, the air conditioner includes an air conditioning module configured to perform an air conditioning operation on a target space. Also, the air conditioner includes a memory storing at least one instruction. Also, the air conditioner includes at least one processor, comprising processing circuitry, individually and/or collectively, configured to execute the at least one instruction to: detect a person in the target space using a sensor detection value of the detection sensor; perform a power saving control operation to adjust at least one of wind strength or a set temperature of the air conditioning module according to a power saving performing condition indicating a condition to perform a power saving control operation being satisfied, based on an absence time during which a person is absent in the target space, and in the power saving control operation, set one power saving learning level from among a plurality of power saving learning levels, according to a performance history of a plurality of intermediate operation stages of the power saving control operation; adjust respective duration times of the plurality of intermediate operation stages according to the set power saving learning level; and adjust at least one of the wind strength or the set temperature while the plurality of intermediate operation stages are being performed according to the absence time.

According to an aspect of an embodiment of the disclosure, provided is a method of controlling an air conditioner. The method includes detecting a person in a target space using a sensor detection value of a detection sensor. Also, the method includes performing a power saving control operation to adjust at least one of wind strength or a set temperature of an air conditioning module, according to a power saving performing condition indicating a condition to perform a power saving control operation being satisfied, based on an absence time during which a person is absent in the target space. The performing of the power saving control operation includes setting one power saving learning level from among a plurality of power saving learning levels according to a performance history of a plurality of intermediate operation stages of the power saving control operation; adjusting respective duration times of the plurality of intermediate operation stages according to the set power saving learning level; and adjusting at least one of the wind strength or the set temperature while the plurality of intermediate operation stages are being performed, according to the absence time.

According to an aspect of an embodiment of the disclosure, provided is a computer-readable recording medium having recorded thereon a program for performing the method, on a computer.

### Brief Description of Drawings

The disclosure may be readily understood with a combination of the following detailed descriptions and the accompanying drawings, wherein reference numbers refer to structural elements. Futher, the above and other aspects, features and advantages of certain embodiments of the present disclosure will be more apparent from the following detailed description, taken in conjunction with the accompanying drawings, in which:
FIG. 1 is a diagram illustrating an example operation of an air conditioner according to an embodiment of the disclosure;
FIG. 2 is a block diagram illustrating an example configuration of an air conditioner according to an embodiment of the disclosure;
FIG. 3 is a flowchart illustrating an example method of controlling an air conditioner according to an embodiment of the disclosure;
FIG. 4 is a diagram illustrating an example preliminary determination stage, a plurality of intermediate operation stages, and a plurality of power saving learning levels, according to an embodiment of the disclosure;
FIG. 5 is a table illustrating example duration times of a preliminary determination stage and a plurality of intermediate operation stages according to an embodiment of the disclosure;
FIG. 6 is a graph illustrating a change in power consumption when power saving control is performed in a basic level, according to an embodiment of the disclosure;
FIG. 7 is a graph illustrating a change in power consumption when power saving control is performed in a third learning level, according to an embodiment of the disclosure;
FIG. 8 is a chart illustrating a procedure for adjusting a set temperature and wind strength in each operation stage, according to an embodiment of the disclosure;
FIG. 9 is a chart illustrating a procedure for adjusting a set temperature and wind strength in each operation stage, according to an embodiment of the disclosure;
FIG. 10 is a chart illustrating example duration times of a preliminary determination stage and a plurality of intermediate operation stages in each of a plurality of user-designated modes, according to an embodiment of the disclosure;
FIG. 11 is a flowchart illustrating an example procedure for performing power saving control and increasing a power saving learning level, according to an embodiment of the disclosure;
FIG. 12 is a flowchart illustrating an example procedure for performing power saving control and decreasing a power saving learning level, according to an embodiment of the disclosure;
FIG. 13 is a flowchart illustrating an example procedure for adjusting a set temperature during power saving control, according to an embodiment of the disclosure;
FIG. 14 is a flowchart illustrating an example procedure for adjusting a power saving learning level according to use time information of a user, according to an embodiment of the disclosure;
FIG. 15 is a flowchart illustrating an example procedure for controlling a detection sensor while performing soft off, according to an embodiment of the disclosure;
FIG. 16 is a block diagram illustrating an example configurartion of an air conditioner according to an embodiment of the disclosure;
FIG. 17 is a diagram illustrating an air conditioner, an external device, and a server, according to an embodiment of the disclosure;
FIG. 18 is a diagram illustrating an example procedure for inputting an absence schedule via an external device, according to an embodiment of the disclosure;
FIG. 19 is a flowchart illustrating an example procedure in which an air conditioner operates based on an absence schedule, according to an embodiment of the disclosure;
FIG. 20 is a diagram illustrating an example procedure in which an air conditioner detects a person from a target space, according to an embodiment of the disclosure;
FIG. 21 is a diagram illustrating an example procedure for adjusting sensor sensitivity when a person is detected from a target space, according to an embodiment of the disclosure;
FIG. 22 is a flowchart illustrating an example method of controlling an air conditioner, according to an embodiment of the disclosure;
FIG. 23 is a flowchart illustrating an example operation of an air conditioner according to an embodiment of the disclosure;
FIG. 24 is a block diagram illustrating an example configuration of an air conditioner, according to an embodiment of the disclosure;
FIG. 25 is a diagram illustrating a Wi-Fi frequency channel according to an embodiment of the disclosure;
FIG. 26 is a diagram illustrating an example in which a Wi-Fi signal is transmitted via a Wi-Fi channel, according to an embodiment of the disclosure;
FIG. 27 is a diagram illustrating an example channel state information (CSI) value according to an embodiment of the disclosure;
FIG. 28 is a diagram illustrating an example CSI value according to an embodiment of the disclosure;
FIG. 29 is a diagram illustrating a result of detecting a motion, based on a CSI value, according to an embodiment of the disclosure;
FIG. 30 is a diagram illustrating an example movement detection result according to a position of an access point (AP), according to an embodiment of the disclosure;
FIG. 31 is a diagram illustrating an example movement detection result according to a position of an AP, according to an embodiment of the disclosure;
FIG. 32 is a graph illustrating a test result according to an embodiment of the disclosure;
FIG. 33 is a flowchart illustrating an example method of controlling an air conditioner, according to an embodiment of the disclosure;
FIG. 34 is a flowchart illustrating an example procedure for activating an absence power saving function and outputting guide information, according to an embodiment of the disclosure;
FIG. 35 is a diagram illustrating an example procedure for outputting guide information, according to an embodiment of the disclosure;
FIG. 36 is a flowchart illustrating an example procedure for outputting a power saving control function unavailable message for a case in which an air conditioner has been performing a power saving control and then cannot perform the power saving control function, according to an embodiment of the disclosure; and
FIG. 37 is a diagram illustrating an example graphical user interface (GUI) for outputting a power saving control function unavailable message, according to an embodiment of the disclosure.

### Mode for the Invention

Various embodiments of the present disclosure and terms used therein are not intended to limit technical features of the present disclosure to particular embodiments, and it is to be appreciated that all changes, equivalents, or substitutes of the various embodiments are included therein.

Throughout the disclosure and drawings, like reference numerals may be used to denote like or similar components.

A singular form of a noun corresponding to an item may include the item or a plurality of the items, unless the context clearly indicates otherwise.

In the disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof.

The term "and/or" as used herein includes a combination of a plurality of related recited elements or any one of a plurality of related recited elements.

The terms "first," "second," etc. as used herein may be only used to distinguish one element from another and do not limit the elements in any other aspects (e.g., importance or order).

When a certain (e.g., first) element is referred to as being "coupled" or "connected" to another (e.g., second) element with or without the terms "functionally" or "communicatively," the certain element may be coupled or connected to the other element directly (e.g., by wire) or wirelessly or through a third element.

The terms "comprise" or "include" as used herein are inclusive and therefore specify the presence of stated features, integers, steps, operations, elements, components, or combinations thereof, but do not preclude the presence or addition of one or more other features, integers, steps, operations, elements, components, or combinations thereof.

It will be understood that when an element is referred to as being "connected to," "coupled to," "supported to," or "in contact with" another element, the element may be "directly connected to, coupled to, supported to, or in contact with" the other element or may be "indirectly connected to, coupled to, supported to, or in contact with" the other element through a third element.

It will be understood that when an element is referred to as being located "on" another element, the element may be in contact with the other element, and another element may also be present between the two elements.

An air conditioner according to an embodiment of the disclosure may refer, for example, to an apparatus that performs functions such as air purification, ventilation, humidity control, cooling, or heating in an air-conditioned space (hereinafter, referred to as "indoor space").

According to an embodiment of the disclosure, the air conditioner may include a heat pump device so as to perform a cooling function or a heating function. The heat pump device may include a refrigeration cycle in which a refrigerant is circulated through a compressor, a first heat exchanger, an expansion device, and a second heat exchanger. All components of the heat pump device may be built into a single housing that forms an external appearance of the air conditioner, and window-type air conditioners or portable air conditioners are examples of such an air conditioner. On the other hand, components of the heat pump device may be split into several parts and built into a plurality of housings that form a single air conditioner, and examples of such an air conditioner include wall-mounted air conditioners, stand-type air conditioners, and system air conditioners.

An air conditioner including a plurality of housings may include at least one outdoor unit installed outdoors and at least one indoor unit installed indoors. For example, an air conditioner may be equipped with one outdoor unit and one indoor unit connected via a refrigerant pipe. For example, an air conditioner may include one outdoor unit and two or more indoor units connected via a refrigerant pipe. For example, an air conditioner may include two or more outdoor units and two or more indoor units connected via a plurality of refrigerant pipes.

An outdoor unit may be electrically connected to an indoor unit. For example, information (or commands) for controlling an air conditioner may be input via an input interface provided on the outdoor or indoor unit, and the outdoor unit and the indoor unit may operate simultaneously or sequentially in response to a user input.

The air conditioner may include an outdoor heat exchanger provided in the outdoor unit, an indoor heat exchanger provided in the indoor unit, and a refrigerant pipe connecting the outdoor heat exchanger to the indoor heat exchanger.

An outdoor heat exchanger may exchange heat between a refrigerant and outdoor air using a phase change (e.g., evaporation or condensation) of the refrigerant. For example, the refrigerant may release heat into the outdoor air during condensation of the refrigerant in the outside heat exchanger, and the refrigerant may absorb heat from the outdoor air during evaporation of the refrigerant flowing in the outside heat exchanger.

An indoor unit is installed indoors. For example, indoor units may be classified into ceiling-mounted indoor units, stand-type indoor units, wall-mounted indoor units, etc., depending on how they are arranged. For example, ceiling-mounted indoor units may be subdivided into 4-way cassette indoor units, 1-way cassette indoor units, duct-type indoor units, etc. depending on a way air is discharged.

Similarly, an indoor heat exchanger may exchange heat between a refrigerant and indoor air using a phase change (e.g., evaporation or condensation) of the refrigerant. For example, while the refrigerant evaporates in the indoor unit, the refrigerant may absorb heat from the indoor air, and the indoor air is cooled as it passes through the cold indoor heat exchanger and then blown out to cool the indoor space. Furthermore, while a refrigerant condenses in the indoor heat exchanger, the refrigerant may release heat into the indoor air, and the indoor air is heated as it passes through the high-temperature indoor heat exchanger and then blown out to heat the indoor space.

That is, the air conditioner performs a cooling or heating function through a phase change process undergone by the refrigerant circulating between the outdoor heat exchanger and the indoor heat exchanger, and for this circulation of the refrigerant, the air conditioner may include a compressor that compresses the refrigerant. The compressor may suck in refrigerant gas through a suction port and compress the refrigerant gas. The compressor may discharge high-temperature, high-pressure refrigerant gas via a discharge port. The compressor may be placed inside the outdoor unit.

The refrigerant may circulate, via a refrigerant pipe, through the compressor, the outdoor heat exchanger, the expansion device, and the indoor heat exchanger in the stated order, or through the compressor, the indoor heat exchanger, the expansion device, and the outdoor heat exchanger in the stated order.

For example, when the air conditioner has one outdoor unit and one indoor unit directly connected via a refrigerant pipe, the refrigerant may circulate between the one outdoor unit and the one indoor unit through the refrigerant pipe.

For example, when the air conditioner has one outdoor unit connected to two or more indoor units via a refrigerant pipe, refrigerants may flow into the plurality of indoor units via refrigerant pipes branching from the outdoor unit. The refrigerants discharged from the plurality of indoor units may be combined together and circulated in the outdoor unit. For example, the plurality of indoor units may each be directly connected to the one outdoor unit in parallel via separate refrigerant pipes.

Each of the plurality of indoor units may operate independently according to an operating mode set by a user. That is, some of the plurality of indoor units may operate in a cooling mode, and others may operate in a heating mode simultaneously. In this case, the refrigerant may be selectively introduced into each indoor unit at a high or low pressure along a designated circulation path via a flow path diverter valve as described below, and then discharged from the indoor unit and circulated to the outdoor unit.

For example, when the air conditioner has two or more outdoor units and two or more indoor units connected via a plurality of refrigerant pipes, refrigerants discharged from the plurality of outdoor units are combined and flow through a single refrigerant pipe, and then diverge again at a certain point to enter the plurality of indoor units.

The plurality of outdoor units may all be driven, or at least some of the outdoor units may not be driven, depending on an operating load corresponding to the amount of operation of the plurality of indoor units. In this case, the refrigerant may flow into and circulate in an outdoor unit that is selectively driven via a flow path diverter valve. The air conditioner may include an expansion device to lower the pressure of the refrigerant entering a heat exchanger. For example, the expansion device may be placed inside an indoor unit, inside an outdoor unit, or both.

For example, the expansion device may lower the temperature and pressure of the refrigerant using a throttling effect. The expansion device may include an orifice capable of reducing a cross-sectional area of a flow path. The temperature and pressure of the refrigerant that passes through the orifice may be lowered.

For example, the expansion device may be implemented as an electronic expansion valve capable of adjusting an opening ratio (a ratio of a cross-sectional area of a flow path in a valve in a partially open state to a cross-sectional area of a flow path in the valve in a fully open state). The amount of refrigerant passing through the expansion device may be controlled depending on the opening ratio of the electronic expansion valve.

The air conditioner may further include a flow path diverter valve provided on a refrigerant circulation flow path. The flow path diverter valve may include, for example, a 4-way valve. The flow path diverter valve may determine a path of circulation of the refrigerant depending on an operating mode of an indoor unit (e.g., cooling operation or heating operation). The flow path diverter valve may be connected to the discharge port of the compressor.

The air conditioner may include an accumulator. The accumulator may be connected to the suction port of the compressor. Low-temperature, low-pressure refrigerant evaporated from an indoor heat exchanger or an outdoor heat exchanger may flow into the accumulator.

When a mixture of refrigerant liquid and refrigerant gas flows into the accumulator, the accumulator may separate the refrigerant liquid from the refrigerant gas and provide the refrigerant gas from which the refrigerant liquid has been separated to the compressor.

An outdoor fan may be provided in the vicinity of the outdoor heat exchanger. The outdoor fan may blow outdoor air into the outdoor heat exchanger to facilitate heat exchange between the refrigerant and the outdoor air.

An outdoor unit of the air conditioner may include at least one sensor. For example, an outdoor unit sensor may be provided as an environment sensor. An outdoor unit sensor may be placed at any location on the inside or outside of the outdoor unit. For example, outdoor unit sensors may include, for example, a temperature sensor for detecting air temperature around the outdoor unit, a humidity sensor for detecting humidity in the air around the outdoor unit, a refrigerant temperature sensor for detecting a refrigerant temperature inside a refrigerant pipe passing through the outdoor unit, or a refrigerant pressure sensor for detecting a refrigerant pressure inside the refrigerant pipe passing through the outdoor unit.

The outdoor unit of the air conditioner may include an outdoor unit communication interface. The outdoor unit communication interface may be provided to receive a control signal from an indoor unit controller of the air conditioner, as described below. The outdoor unit may control, based on a control signal received via the outdoor unit communication interface, an operation of a compressor, an outdoor heat exchanger, an expansion device, a flow path diverter valve, an accumulator, or an outdoor fan. The outdoor unit may transmit, via the outdoor unit communication interface, a sensing value detected by an outdoor unit sensor to the indoor unit controller.

The indoor unit of the air conditioner may include a housing, a blower that circulates air inside or outside the housing, and an indoor heat exchanger that exchanges heat with air flowing into the housing.

The housing may include an air inlet. Indoor air may be drawn into the housing via the air inlet.

The indoor unit of the air conditioner may include a filter provided to filter out foreign substances from the air drawn into the housing via the air inlet.

The housing may include an air outlet. Air flowing inside the housing may be discharged from the housing via the air outlet.

The housing of the indoor unit may include an air flow guide that guides a direction of air discharged through the air outlet. For example, the air flow guide may include a blade located on the air outlet. For example, the air flow guide may include an auxiliary fan for regulating an exhaust air flow. However, the disclosure is not limited thereto, and the air flow guide may be omitted.

Inside the housing of the indoor unit, the indoor heat exchanger and the blower may be provided on a flow path connecting the air inlet and the air outlet.

The blower may include an indoor fan and a fan motor. For example, indoor fans may include an axial fan, a diagonal fan, a crossflow fan, and a centrifugal fan.

The indoor heat exchanger may be placed between the blower and the air outlet, or between the air inlet and the blower. The indoor heat exchanger may absorb heat from air drawn in through the air inlet or transfer heat to air drawn in through the air inlet. The indoor heat exchanger may include a heat exchange tube in which a refrigerant flows, and heat exchange fins that are in contact with the heat exchange tube to increase the heat transfer area.

The indoor unit of the air conditioner may include a drain tray located below the indoor heat exchanger to collect condensate water generated in the indoor heat exchanger. The condensate water collected in the drain tray may be drained to the outside via a drain hose. The drain tray may be provided to support the indoor heat exchanger.

The indoor unit of the air conditioner may include an input interface. The input interface may include any type of user input devices, including buttons, switches, touch screens, and/or touch pads. The user may directly input setting data (e.g., desired indoor temperature, operating mode settings for cooling/heating/dehumidification/air purification, outlet selection settings, and/or air volume settings) via the input interface.

The input interface may be connected to an external input device. For example, the input interface may be electrically connected to a wired remote controller. The wired remote controller may be installed at a specific location in an indoor space (e.g., a portion of a wall). The user may operate the wired remote controller to input setting data regarding an operation of the air conditioner. An electrical signal corresponding to setting data obtained via the wired remote controller may be transmitted to the input interface. In addition, the input interface may include an infrared sensor. The user may remotely input setting data regarding the operation of the air conditioner using a wireless remote controller. The setting data input via the wireless remote controller may be transmitted to the input interface as an infrared signal.

Also, the input interface may include a microphone. A user's voice command may be obtained via the microphone. The microphone may convert the user's voice command into an electrical signal and transmit the electrical signal to the indoor unit controller. The indoor unit controller may control components of the air conditioner to perform a function corresponding to the user's voice command. Setting data (e.g., desired indoor temperature, operating mode settings for cooling/heating/dehumidification/air purification, outlet selection settings, and/or air volume settings) obtained via the input interface may be transmitted to the indoor unit controller as described below. For example, the setting data obtained via the input interface may be transmitted to the outside, e.g., an outdoor unit or a server, via an indoor unit communication interface as described below.

The indoor unit of the air conditioner may include a power module. The power module may be connected to an external power source to supply power to components of the indoor unit.

The indoor unit of the air conditioner may include an indoor unit sensor. The indoor unit sensor may be an environment sensor placed inside or outside the housing. For example, the indoor unit sensor may include one or more temperature sensors and/or one or more humidity sensors arranged in a predetermined space inside or outside the housing of the indoor unit. For example, the indoor unit sensor may include a refrigerant temperature sensor for detecting a refrigerant temperature inside a refrigerant pipe passing through the indoor unit. For example, the indoor unit sensor may include refrigerant temperature sensors that respectively detect temperatures at an inlet, a middle, and/or an outlet of the refrigerant pipe passing through the indoor heat exchanger.

For example, pieces of environment information respectively detected by the indoor unit sensors may be transmitted to the indoor unit controller as described below, or may be transmitted to the outside via the indoor unit communication interface as described below.

The indoor unit of the air conditioner may include the indoor unit communication interface. The indoor unit communication interface may include various communication circuitry including, for example, at least one of a short-range communication module or a long-range communication module. The indoor unit communication interface may include at least one antenna for wirelessly communicating with other devices. The outdoor unit may include the outdoor unit communication interface. The outdoor unit communication interface may also include at least one of a short-range communication module or a long-range communication module.

The short-range communication module may include, but is not limited to, a Bluetooth communication module, a Bluetooth Low Energy (BLE) communication module, a near field communication (NFC) communication module, a wireless local area network (WLAN) (Wi-Fi) communication module, a ZigBee communication module, an Infrared Data Association (IrDA) communication module, a Wi-Fi Direct (WFD) communication module, an ultra-wideband (UWB) communication module, an Ant+ communication module, a microwave (uWave) communication module, etc.

The long-range communication module may include a communication module that performs various types of long-range communications, and include a mobile communication interface. The mobile communication interface transmits and receives wireless signals to and from at least one of a base station, an external terminal, or a server on a mobile communication network.

The indoor unit communication interface may communicate with an external device such as a server, a mobile device, or another home appliance via a neighboring access point (AP). The AP may connect a LAN to which the air conditioner or a user device is connected to a wide area network (WAN) to which a server is connected. The air conditioner or user device may be connected to the server via the WAN. The indoor unit of the air conditioner may include the indoor unit controller that controls the components of the indoor unit, including the blower. The outdoor unit of the air conditioner may include an outdoor unit controller that controls components of the outdoor unit, including a compressor. The indoor unit controller may communicate with the outdoor unit controller via the indoor unit communication interface and the outdoor unit communication interface. The outdoor unit communication interface may transmit a control signal generated by the outdoor unit controller to the indoor unit communication interface, or may transmit, to the outdoor unit controller, a control signal transmitted from the indoor unit communication interface. In other words, the outdoor unit and the indoor unit may communicate in both directions. The outdoor unit and the indoor unit may transmit and receive various signals generated during an operation of the air conditioner.

The outdoor unit controller may be electrically connected to the components of the outdoor unit and control an operation of each component. For example, the outdoor unit controller may adjust a frequency of the compressor and control a flow path diverter valve to change a circulation direction of a refrigerant. The outdoor unit controller may adjust a rotation speed of the outdoor fan. In addition, the outdoor unit controller may generate a control signal for adjusting the degree of opening of an expansion valve. Under the control of the outdoor unit controller, the refrigerant may circulate along a refrigerant circulation circuit including the compressor, the flow path diverter valve, the outdoor heat exchanger, the expansion valve, and the indoor heat exchanger.

Various temperature sensors included in the outdoor unit and the indoor unit may each transmit an electrical signal corresponding to a temperature detected by each of the temperature sensors (to the outdoor unit controller and/or the indoor unit controller. For example, each of humidity sensors included in the outdoor unit and the indoor unit may transmit an electrical signal corresponding to its detected humidity to the outdoor unit controller and/or the indoor unit controller.

The indoor unit controller may obtain a user input from a user device including a mobile device or the like via the indoor unit communication interface, and obtain a user input directly via the input interface or through a remote controller. The indoor unit controller may control the elements of the indoor unit, including the blower, etc., in response to the received user input. The indoor unit controller may transmit information about the received user input to the outdoor unit controller of the outdoor unit.

The outdoor unit controller may control the elements of the outdoor unit, including the compressor, etc., based on information about a user input received from the indoor unit. For example, when a control signal corresponding to a user input for selecting an operating mode such as cooling operation, heating operation, blowing operation, defrosting operation, or dehumidifying operation is received from the indoor unit, the outdoor unit controller may control the elements of the outdoor unit to perform an operation of the air conditioner, corresponding to the selected operating mode.

The outdoor unit controller and the indoor unit controller may each include a processor and memory. The indoor unit controller may include at least one first processor and at least one first memory, and the outdoor unit controller may include at least one second processor and at least one second memory.

The memory may record/store various pieces of information necessary for operations of the air conditioner. The memory may store instructions, applications, data, and/or programs necessary for operations of the air conditioner. For example, the memory may store various programs for cooling operation, heating operation, dehumidifying operation, and/or defrosting operation of the air conditioner. The memory may include volatile memories, such as static random access memory (SRAM) and dynamic RAM (DRAM), for temporarily storing data. Furthermore, the memory may include non-volatile memories for long-term storage of data, such as read-only memory (ROM), erasable programmable ROM (EPROM), and electrically erasable PROM (EEPROM).

The processor may include various processing circuitry and generate control signals for controlling operations of the air conditioner, based on instructions, applications, data, and/or programs stored in the memory. The processor is a hardware component and may include logic circuits and arithmetic circuits. The processor may process data according to programs and/or instructions provided from the memory and generate control signals based on processing results. The memory and processor may each be implemented as a single control circuit or as a plurality of circuits. The processor, according to various embodiments, may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The indoor unit of the air conditioner may include an output interface. The output interface is electrically connected to the indoor unit controller and may output information related to an operation of the air conditioner under the control of the indoor unit controller. For example, the output interface may output information such as operating mode, wind direction, air volume, and temperature selected by a user input. In addition, the output interface may output sensing information and warning/error messages obtained from the indoor unit sensor or the outdoor unit sensor.

The output interface may include a display and a speaker. The speaker is an audio device that may output a variety of sounds. The display may display information input by the user or information provided to the user using various graphical elements. For example, operation information about the air conditioner may be displayed as at least one of an image or text. Also, the display may include indicators that provide specific information. The display may include a liquid crystal display (LCD) panel, a light emitting diode panel (LED) panel, an organic light emitting diode (OLED) panel, a micro LED panel, and/or a plurality of LEDs.

Hereinafter, air conditioners according to various embodiments of the disclosure will be described in greater detail with reference to the drawings.

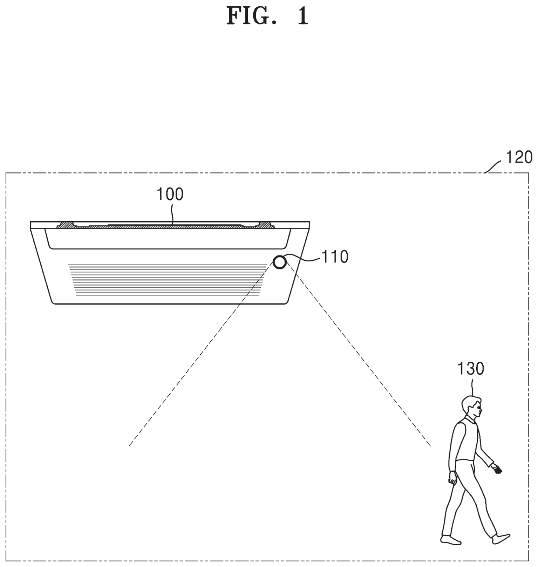

FIG. 1 is a diagram illustrating an example operation of an air conditioner according to an embodiment of the disclosure.

According to an embodiment of the disclosure, an air conditioner 100 performs an air conditioning operation on a target space 120. The air conditioning operation may include, for example, and without limitation, cooling, heating, air conditioning, dehumidification, blowing operations, and the like. The air conditioner 100 may be implemented in the form of a cooler, a heater, a cooler/heater, an air purifier, a dehumidifier, and the like. The disclosure will now be described, focusing on a case in which the air conditioner 100 corresponds to a cooler. However, this is only for convenience of descriptions, and the disclosure is not limited thereto.

The air conditioner 100 may include a detection sensor 110. The detection sensor 110 detects a subject (e.g., 130) in the target space 120. The air conditioner 100 may determine whether a person 130 is present in the target space 120, using a sensor detection value of the detection sensor 110. Based on whether the person 130 is present in the target space 120, the air conditioner 100 may control on/off of an air condemning operation, or may control wind strength or a set temperature.

The target space 120 indicates an indoor space in which the air conditioner 100 may be installed. The target space 120 may correspond to various types of indoor space, including housing, offices, shops, rooms, commercial spaces, work spaces, or the like.

According to an embodiment of the disclosure, the air conditioner 100 performs a power saving control operation, based on whether the person 130 is present in the target space 120. Power saving control may refer, for example, to an operation of controlling the air conditioner 100 so as to decrease power consumption of the air conditioner 100, based on determining, by the detection sensor 110, that a user is not present in the target space 120. The air conditioner 100 may adjust a set temperature or adjust wind strength by performing power saving control, thereby decreasing power consumption. For example, when the air conditioner 100 is a cooler, power consumption may be decreased by increasing a set temperature or decreasing wind strength. When the air conditioner 100 is a heater, power consumption may be decreased by decreasing a set temperature or decreasing wind strength. Also, for example, when the air conditioner 100 operates in a dehumidifier mode, power consumption may be decreased by decreasing wind strength. For example, when the air conditioner 100 operates in an air purifier mode, power consumption may be decreased by decreasing wind strength.

Power saving control by the air conditioner 100 may be performed as one of operations of a power saving mode (or a standby mode). The power saving mode refers to a mode in which the air conditioner 100 operates with a lower power than a normal mode in which the air conditioner 100 normally operates, and in the power saving mode, at least one configuration from among a plurality of configurations included in the air conditioner 100 may be turned off (or inactivated) or a setting value of at least one configuration may be adjusted. In this regard, the power saving mode may be referred to as a low power mode, a standby mode, or the like.

According to an embodiment of the disclosure, a plurality of intermediate operation stages may be sequentially performed in the power saving control operation. In the plurality of intermediate operation stages, at least one of a set temperature or wind strength is set to be different from the other one. Power saving control may sequentially decrease power consumption by sequentially passing through the plurality of intermediate operation stages. For example, the air conditioner 100 may switch from a first intermediate operation stage to a wind-free mode, and may decrease a set temperature by 2°C in a second intermediate operation stage.

Each of the intermediate operation stages may have a preset duration time. The preset duration time may be set to be the same or may vary. For example, the plurality of intermediate operation stages may have three processes, and a duration time of each intermediate operation stage may be set to be 30 minutes. The number and combination of the plurality of intermediate operation stages may be variously determined. An intermediate operation stage may be referred to as an intermediate driving operation.

According to an embodiment of the disclosure, the air conditioner 100 operates at one of a plurality of power saving learning levels. Each of the power saving learning levels refers to a level for differently setting a duration time of the plurality of intermediate operation stages. According to an embodiment of the disclosure, the preset duration time of the plurality of intermediate operation stages may be adjusted according to a power saving learning level. The air conditioner 100 may set one level from among the plurality of power saving learning levels, according to a performance history of the plurality of intermediate operation stages. For example, the air conditioner 100 may increase a power saving learning level when a soft off stage is reached through the plurality of intermediate operation stages. According to a power saving learning level, a decree at which the air conditioner 100 decreases power consumption varies. For example, at a high degree of a power saving learning level, the soft off stage is rapidly reached, such that power consumption may be further rapidly decreased. On the other hand, at a low degree of the power saving learning level, a speed of decreasing power consumption is relatively low but a malfunction possibility may be decreased as a possibility of incorrectly determining that a person is not present in a target space.

The soft off stage corresponds to an operation in which the detection sensor 110 of the air conditioner 100 is activated and an operation of an air conditioning module 212 is stopped. The soft off stage may be performed in a period in which it is determined that a person is not present in a target space. When a person is detected during an operation in the soft off state, and thus, it is determined that the person is present in the target space, the soft off state is stopped, and the air conditioner 100 wakes up and performs an air conditioning operation again. When waking up from the soft off state, the air conditioner 100 may perform the air conditioning operation again, according to a set temperature and wind strength which were set by a user before power saving control. The soft off stage may also be referred to as a soft off operation.

When a reference time during which the air conditioner 100 determines that a person is not present is excessively long, the air conditioner 100 unnecessarily performs driving during absence of a person in the target space 120, and thus, an energy saving effect may be low. On the other hand, when the reference time during which the air conditioner 100 determines that a person is not present is excessively short, as switching to power saving driving is early performed, an indoor temperature increases, such that the air conditioner 100 may not be able to provide a comfortable environment to a user. According to an embodiment of the disclosure, based on a reference time of absence power saving set by a user or a manufacturer, an absence time pattern of an actual user is learned, and the reference time of determining power saving control is adjusted, such that energy consumption may be decreased while a degree of comfortability is increased.

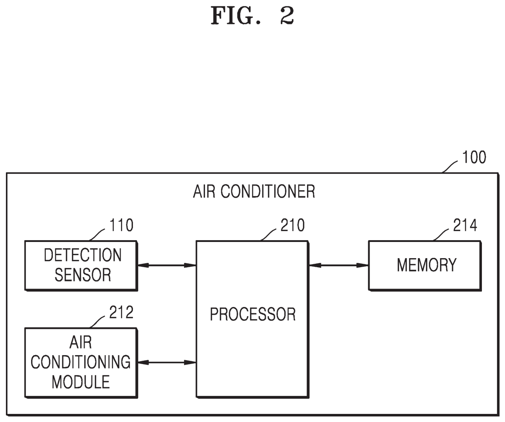

FIG. 2 is a block diagram illustrating an example configuration of an air conditioner according to an embodiment of the disclosure.

According to an embodiment of the disclosure, the air conditioner 100 includes the detection sensor 110, a processor (e.g., including processing circuitry) 210, the air conditioning module (e.g., including a heat pump device) 212, and a memory 214. The block diagram of the air conditioner 100 of FIG. 2 may correspond to a block diagram of an indoor unit.

The air conditioner 100 may be implemented in various installation forms. For example, the air conditioner 100 may be implemented in a stand type, a wall-mounted type, a system air conditioner type built in a ceiling, or a home-multi air conditioner type.

The detection sensor 110 may detect a subject in the target space 120. The detection sensor 110 may include a Time of Flight (ToF) sensor, an ultrasound sensor, an infrared sensor, an optical sensor, a radio detection and ranging (radar) sensor, a light detection and ranging (LiDAR) sensor, or the like. The detection sensor 110 is provided to output a signal to the target space 120 and detect a reflection signal. The detection sensor 110 may be provided at the front surface of the air conditioner 100 so as to face the target space 120. The detection sensor 110 generates and transmits a sensor detection value to the processor 210.

The processor 210 may include various processing circuitry and controls all operations of the air conditioner 100. The processor 210 may be implemented as one or more processors. The processor 210 may perform a preset operation by executing at least one instruction or command stored in the memory 214. Also, the processor 210 controls operations of elements included in the air conditioner 100. The processor 210 may include a central processing unit (CPU), a microprocessor, or the like. The processor 210, may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The processor 210 may determine, using a sensor detection value of the detection sensor 110, whether there is a moving subject, and when there is the moving subject, the processor 210 determines that a person is present in the target space 120. According to an embodiment of the disclosure, the processor 210 determines, using the sensor detection value, whether the detected subject is a person. For example, in a case where the detection sensor 110 corresponds to an infrared sensor, when an infrared value corresponding to a person is detected, the processor 210 determines that the person is present in the target space 120. According to an embodiment of the disclosure, the processor 210 determines whether the detected subject corresponds to a human shape, based on the sensor detection value, and when the detected subject corresponds to the human shape, the processor 210 determines that the person is present in the target space 120.

According to an embodiment of the disclosure, the detection sensor 110 may correspond, for example, to a radar sensor, and the processor 210 determines, using a sensor detection value of the radar sensor, whether the detected subject corresponds to a human shape. The radar sensor outputs a radar signal to the target space 120, and detects a signal reflected from the subject in the target space 120, as the sensor detection value. The processor 210 detects the subject in the target space 120 using the sensor detection value of the radar sensor. The processor 210 detects the subject in the target space 120 with a preset frame rate, and detects a movement of the subject. When a value of the movement of the subject in the target space 120 is equal to or greater than a reference value, the processor 210 determines that a person is present in the target space 120. For example, the processor 210 detects the subject in the target space 120 with a cycle of 30 frames/second, and when a movement value per second of the subject is equal to or greater than the reference value, the processor 210 determines that a person is present in the target space 120. According to an embodiment of the disclosure, based on a result of subject recognition based on the sensor detection value of the radar sensor, the processor 210 determines whether the recognized subject is a person. The processor 210 may determine whether the recognized subject is a person, based on a shape of the recognized subject. When the recognized subject corresponds to a person, and the movement value is equal to or greater than the reference value, the processor 210 determines that a person is present in the target space 120. When the recognized subject does not correspond to a person, the processor 210 determines that a person is not present in the target space 120. Also, according to an embodiment of the disclosure, even when the recognized subject corresponds to a pet, the processor 210 may determine that a person is present in the target space 120. Therefore, when the detected subject corresponds to a person or a pet, and its movement value is equal to or greater than the reference value, the processor 210 may determine that a person is present in the target space 120.

The air conditioning module 212 includes a heat pump device and performs an air conditioning operation. The air conditioning module 212 adjusts cooling or non-cooling, a cooling strength, heating or non-heating, a heating strength, air volume, or the like, based on a control signal or an operating signal input from the processor 210. The air conditioning module 212 may include a heat exchanger, a motor, an inverter, a fan, a filter, or the like. The air conditioning module 212 may include the heat exchanger, and may perform heat exchange between a refrigerant and indoor air using a phase change (e.g., expansion or compression) of the refrigerant of the heat exchanger. For example, the refrigerant may absorb heat from indoor air while the refrigerant expands in the heat exchanger, and thus, the indoor air may be cooled. While the refrigerant is compressed in the heat exchanger, the refrigerant may release heat into the indoor air, and thus, the indoor space may be heated.

The processor 210 counts an absence time in which it is determined that a person is not present in the target space 120. The processor 210 counts a time in which it is determined that a person is continuously absent, as the absence time. When a person is detected from the target space 120, the absence time is reset to 0. Afterward, when it is determined that a person is absent in the target space 120 again, the absence time is recounted from 0.

The processor 210 determines whether to perform power saving control, based on the absence time. The power saving control refers to an operation of sequentially adjusting wind strength or a set temperature through a plurality of intermediate operation stages. According to an embodiment of the disclosure, the processor 210 performs a preliminary determination stage of determining whether to perform the power saving control. The processor 210 counts the absence time while a duration time of the preliminary determination stage. For example, the duration time of the preliminary determination stage may be 60 minutes. While the preliminary determination stage is performed, when the absence time exceeds the duration time, the processor 210 determines to perform the power saving control. That is, while the preliminary determination stage is performed, when a person is not detected during the duration time set to correspond to the preliminary determination stage, the processor 210 determines to perform the power saving control. When the absence time is ended before the duration time is reached while the preliminary determination stage is performed, the processor 210 ends the preliminary determination stage and does not perform the power saving control. That is, when a person is detected, and thus, the absence time is reset to 0 while the preliminary determination stage is performed, the processor 210 ends the preliminary determination stage and does not perform the power saving control. The preliminary determination stage may be referred to as the preliminary determination operation.

When the processor 210 determines to perform the power saving control, the processor 210 performs the power saving control through a plurality of intermediate operation stages. The processor 210 adjusts at least one of a set temperature or wind strength in each of the intermediate operation stages. The processor 210 adjusts a set temperature or wind strength by controlling the air conditioning module 212.

In order to adjust the set temperature, the processor 210 may change a temperature setting value of an indoor unit and may adjust a motor rotation speed of an outdoor unit compressor or an indoor unit compressor, thereby adjusting the set temperature. For example, when a set temperature is set by a user, the processor 210 may adjust a revolution per minute (RPM) of a motor, according to the set temperature. When an indoor temperature detected by a temperature sensor is higher than the set temperature, the processor 210 may control an RPM of a compressor motor to increase, and when an indoor temperature detected by the temperature sensor is lower than the set temperature, the processor 210 may decrease an RPM of the compressor motor or may stop the compressor motor. The processor 210 may generate a control signal for adjusting an RPM of the compressor motor, and may output the control signal to the air conditioning module 212. The air conditioning module 212 may adjust a cooling degree of air by adjusting an RPM of the compressor motor, based on the control signal of the processor 210. An indoor temperature may follow a set temperature by adjusting an RPM of the compressor motor. By increasing the RPM of the compressor motor, the air conditioning module 212 may discharge an air flow with a temperature lower than before to the indoor, and thus, an indoor temperature may be decreased. Also, by decreasing the RPM of the compressor motor or stopping the compressor motor, the air conditioning module 212 may discharge an air flow with a temperature higher than before to the indoor, and thus, an indoor temperature may be increased. A part that occupies a high percentage of power consumption of the air conditioner 100 is the outdoor unit compressor. According to an embodiment of the disclosure, a set temperature is adjusted while power saving control is performed, and thus, power consumption may be sharply decreased.

In order to adjust wind strength, the processor 210 may switch to a wind-free mode by controlling a wind door or blades of an indoor unit. The indoor unit operates in the wind-free mode by discharging air while the wind door is closed. The processor 210 generates a control signal for closing the wind door, and outputs the control signal to the air conditioning module 212. The air conditioning module 212 operates in the wind-free mode by closing the wind door, in response to the control signal input from the processor 210. The processor 210 may control a fan speed of the indoor unit so as to control the wind strength. The processor 210 generates a control signal for adjusting the fan speed, and outputs the control signal to the air conditioning module 212. The air conditioning module 212 adjusts the fan speed, in response to the control signal input from the processor 210.

When performing power saving control, the processor 210 operates at one level from among a plurality of power saving learning levels. The higher, the power saving learning level is, the lower, a duration time of the plurality of intermediate operation stages is. Therefore, a power consumption decrease speed of decreasing power consumption and a soft off reach speed of reaching a soft off stage are fast. The lower, the power saving learning level is, the higher, the duration time of the plurality of intermediate operation stages is. Therefore, the power consumption decrease speed and the soft off reach speed are slow. The processor 210 adjusts respective duration times of the plurality of intermediate operation stages, according to the power saving learning level.

The power saving learning level may be determined according to a performance history of the intermediate operation stage. When determining the performance history of the intermediate operation stage, the processor 210 may consider references such as to what intermediate operation stage has been performed, whether soft off is reached, at what intermediate operation stage it was stopped, or the like. According to an embodiment of the disclosure, when the air conditioner 100 in a soft off state is maintained by power saving control during a preset duration time, the processor 210 may increase the power saving learning level. Also, according to an embodiment of the disclosure, when a person is detected before the preset duration time is reached in the soft off state, and thus, the air conditioner 100 wakes up, the processor 210 may increase the power saving learning level.

The memory 214 stores various information, data, at least one instruction, at least one program, or the like which are necessary for operations of the air conditioner 100. The memory 214 may include at least one of a volatile memory or a non-volatile memory or a combination thereof. The memory 214 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc. The memory 214 may correspond to a web storage or a cloud server which performs a storage function on Internet.

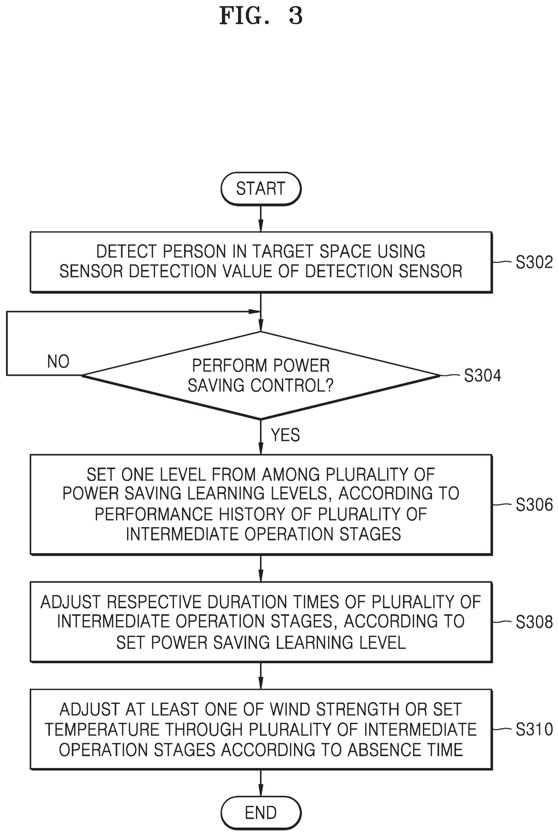

FIG. 3 is a flowchart illustrating an example method of controlling an air conditioner according to an embodiment of the disclosure.

The method of controlling an air conditioner according to an embodiment of the disclosure may be performed by the air conditioner 100 according to an embodiment of the disclosure.

In operation S302, the air conditioner 100 detects a person in a target space using a sensor detection value of the detection sensor 110. The air conditioner 100 determines whether there is a moving subject, using the sensor detection value, and when there is the moving subject, the air conditioner 100 determines that a person is present in the target space 120. The moving subject may include a pet. According to an embodiment of the disclosure, the air conditioner 100 determines, using the sensor detection value, whether the detected subject is a person. For example, in a case where the detection sensor 110 corresponds to an infrared sensor, when an infrared value corresponds to a person is detected, the air conditioner 100 determines that a person is present in the target space 120. According to an embodiment of the disclosure, the air conditioner 100 determines whether the detected subject corresponds to a human shape, based on the sensor detection value, and when the detected subject corresponds to the human shape, the air conditioner 100 determines that a person is present in the target space 120.

In operation S302, the air conditioner 100 includes an operation of detecting a person, using the sensor detection value or based on the sensor detection value. Here, the operation of detecting a person may include an operation of detecting a person by identifying the sensor detection value, an operation of detecting a person by determining a person detection result, an operation of detecting a person by analyzing the sensor detection value, an operation of detecting a person by searching the sensor detection value, an operation of detecting a person by recognizing the sensor detection value, an operation of detecting a person by distinguishing between sensor detection values, an operation of detecting a person by sorting sensor detection values, and an operation of detecting a person by dividing sensor detection values.

In operation S304, the air conditioner 100 determines whether to perform power saving control, based on an absence time that is a time in which a person is absent in a target space. The air conditioner 100 may perform a preliminary determination stage, and when the absence time reaches a duration time of the preliminary determination stage, the air conditioner 100 may perform the power saving control. The duration time of the preliminary determination stage may indicate a reference absence time for determining whether to perform the power saving control in the preliminary determination stage. When the absence time is stopped before it reaches the duration time of the preliminary determination stage, the air conditioner 100 may not perform the power saving control. For example, when the absence time is longer than a reference time of determining the power saving control, the air conditioner 100 may perform the power saving control, and when the absence time is shorter than the reference time of determining the power saving control, the air conditioner 100 may not perform the power saving control.

When it is determined to perform the power saving control, in operation S306, the air conditioner 100 may set one level from among a plurality of power saving learning levels, according to a performance history of a plurality of intermediate operation stages. According to an embodiment of the disclosure, when the air conditioner 100 reaches a soft off stage and is maintained in the soft off stage during the duration time, the air conditioner 100 may increase a power saving learning level. Also, according to an embodiment of the disclosure, when a person is detected before the air conditioner 100 in a soft off state reaches the duration time, and thus, the air conditioner 100 wakes up, the air conditioner 100 may increase a power saving learning level.

In operation S308, the air conditioner 100 adjusts respective duration times of the plurality of intermediate operation stages, according to a set power saving learning level. The duration time of each of the plurality of intermediate operation stages indicates a time in which an operation of each intermediate operation stage is maintained according to a setting value corresponding to each intermediate operation stage. An operation of adjusting respective duration times of the plurality of intermediate operation stages may be represented as an operation of changing a duration time, an operation of increasing a duration time, an operation of decreasing a duration time, an operation of setting a duration time, or an operation of designating a duration time. The respective duration times of the plurality of intermediate operation stages may be differently set according to a power saving learning level.

In operation S310, the air conditioner 100 adjusts at least one of wind strength or a set temperature through the plurality of intermediate operation stages according to the absence time. The air conditioner 100 may sequentially perform the plurality of intermediate operation stages. The air conditioner 100 adjusts wind strength or a set temperature in each of the intermediate operation stages. The air conditioner 100 may perform an intermediate operation stage during a duration time of each intermediate operation stage, and when the duration time of the intermediate operation stage is ended, the air conditioner 100 performs a next intermediate operation stage. When an intermediate operation stage is switched, the air conditioner 100 adjusts wind strength or a set temperature. During a duration time of an intermediate operation stage, the air conditioner 100 performs an air conditioning operation by maintaining the adjusted wind strength or set temperature.

When a person is detected while power saving control is performed, the air conditioner 100 stops an intermediate operation stage, and ends the power saving control. When the power saving control is ended as a person is detected, the air conditioner 100 may operate with wind strength and a set temperature which were set before the power saving control.

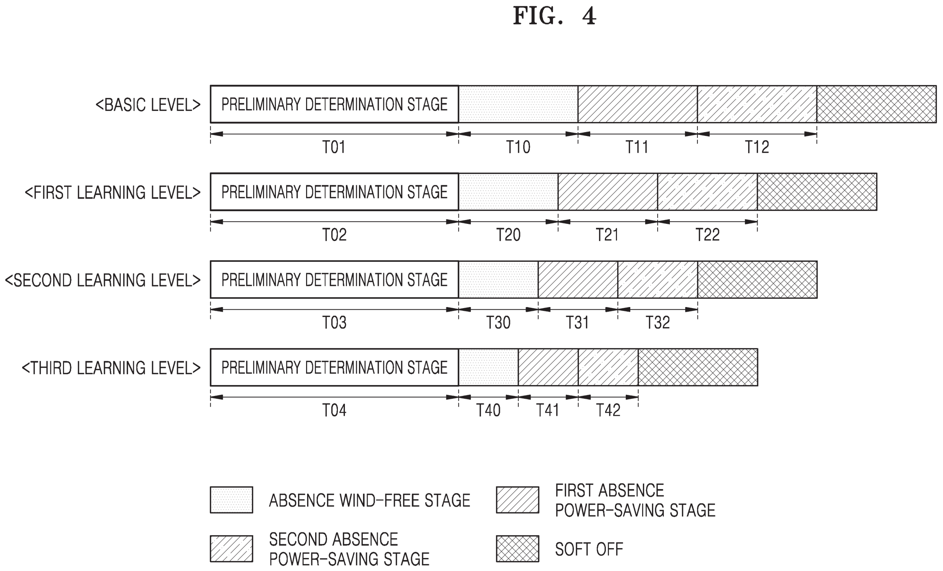

FIG. 4 is a diagram illustrating an example preliminary determination stage, a plurality of intermediate operation stages, and a plurality of power saving learning levels, according to an embodiment of the disclosure.

According to an embodiment of the disclosure, the air conditioner 100 may perform a preliminary determination stage for determining whether to perform power saving control, based on an absence time, and a plurality of intermediate operation stages corresponding to the power saving control. According to an embodiment of the disclosure, the plurality of intermediate operation stages may include an absence wind-free stage, a first absence power-saving stage, and a second absence power-saving stage. However, this is merely an example, and the number of the plurality of intermediate operation stages and a name of each stage may be variously determined.

The preliminary determination stage is a stage in which the air conditioner 100 determines whether to perform power saving control. During a duration time of the preliminary determination stage, the air conditioner 100 determines whether a user is absent, and when an absence time reaches the duration time of the preliminary determination stage, the air conditioner 100 starts the power saving control. When a person is detected from a target space in the preliminary determination stage, the preliminary determination stage is ended, and the air conditioner 100 does not perform the power saving control, and returns to a normal operation.

When the air conditioner 100 starts the power saving control, the air conditioner 100 sequentially performs an absence wind-free stage, a first absence power-saving stage, and a second absence power-saving stage. Respective duration times of the absence wind-free stage, the first absence power-saving stage, and the second absence power-saving stage may be preset. The power saving control is performed during a time in which it is determined that a person is not present in a target space, and when a person is detected from the target space while the power saving control is performed, the power saving control is ended.

The absence wind-free stage, the first absence power-saving stage, and the second absence power-saving stage are completed, the air conditioner 100 performs a soft off operation. The soft off operation refers to a state in which the detection sensor 110 of the air conditioner 100 is activated, and an operation of the air conditioning module 212 is stopped. The soft off operation is performed during a time in which it is determined that a person is not present in a target space. When a person is detected during an operation in the soft off state, and thus, it is determined that the person is present in the target space, the soft off state is stopped, and the air conditioner 100 wakes up and performs an air conditioning operation again. When waking up from the soft off state, the air conditioner 100 may perform the air conditioning operation again, according to a set temperature and wind strength which were set by a user before the power saving control.

According to an embodiment of the disclosure, when the soft off state is maintained during a preset duration time, the air conditioner 100 may perform a hard off operation. A hard off state refers to an operation in which the detection sensor 110 of the air conditioner 100 is inactivated, and an operation of the air conditioning module 212 is stopped.

According to an embodiment of the disclosure, when performing power saving control, the air conditioner 100 may set one level from among a plurality of power saving learning levels. According to an embodiment of the disclosure, the plurality of power saving learning levels include a basic level, a first learning level, a second learning level, and a third learning level. As described above, the air conditioner 100 may set one level from among the plurality of power saving learning levels, according to a performance history of the plurality of intermediate operation stages. According to an embodiment of the disclosure, respective duration times of the plurality of intermediate operation stages may be differently set according to the set power saving learning level. As illustrated in FIG. 4, in the basic level, duration times of the preliminary determination stage, the absence wind-free stage, the first absence power-saving stage, and the second absence power-saving stage may be respectively set to T01, T10, T11, and T12. Also, in the first learning level, duration times of the preliminary determination stage, the absence wind-free stage, the first absence power-saving stage, and the second absence power-saving stage may be respectively set to T02, T20, T21, and T22. Also, in the second learning level, duration times of the preliminary determination stage, the absence wind-free stage, the first absence power-saving stage, and the second absence power-saving stage may be respectively set to T03, T30, T31, and T32. Also, in the third learning level, duration times of the preliminary determination stage, the absence wind-free stage, the first absence power-saving stage, and the second absence power-saving stage may be respectively set to T04, T40, T41, and T42.

According to an embodiment of the disclosure, T01, T02, T03, and T04 which are duration times of the preliminary determination stage in each power saving learning level may be set to be equal to each other. Also, according to an embodiment of the disclosure, T10, T20, T30, and T40 which are duration times of the absence wind-free stage in each power saving learning level may be set to be different from each other. Also, according to an embodiment of the disclosure, T11, T21, T31, and T41 which are duration times of the first absence power-saving stage in each power saving learning level may be set to be different from each other. Also, according to an embodiment of the disclosure, T12, T22, T32, and T42 which are duration times of the second absence power-saving stage in each power saving learning level may be set to be different from each other.

According to an embodiment of the disclosure, the duration times (T11, T21, T31, and T41) of the first absence power-saving stage and the duration times (T12, T22, T32, and T42) of the second absence power-saving stage in each power saving learning level may be set to be the same value in the same power saving learning level.

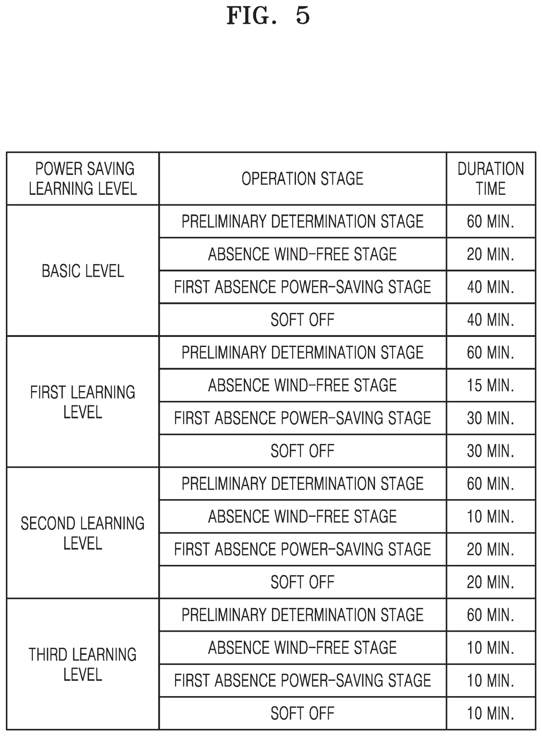

FIG. 5 is a table illustrating example duration times of a preliminary determination stage and a plurality of intermediate operation stages according to an embodiment of the disclosure. With reference to FIG. 5, an example of a case in which the plurality of intermediate operation stages include an absence wind-free stage and a first absence power-saving stage will now be described. When the plurality of intermediate operation stages include the absence wind-free stage, the first absence power-saving stage, and a second absence power-saving stage, a duration time of the second absence power-saving stage may be additionally defined.

According to an embodiment of the disclosure, duration times of a preliminary determination stage and a plurality of intermediate operation stages may be respectively defined according to a plurality of power saving learning levels. As illustrated in FIG. 5, duration times of the absence wind-free stage, the first absence power-saving stage, and a soft off state may be maintained or decreased as a learning level increases. Also, as a saving learning level increases, a total sum of duration times of the absence wind-free stage, the first absence power-saving stage, and the soft off state is decreased. Therefore, as a power saving learning level increases, a time to be taken to reach the soft off state when a person is absent in a target space is set to be short.

According to an embodiment of the disclosure, as illustrated in FIG. 5, the duration time of the preliminary determination stage may be set to be longer than the duration times of the absence wind-free stage, the first absence power-saving stage, and the soft off state. Also, the duration time of the preliminary determination stage may be set to be equal in each power saving learning level.

Referring to FIG. 5, in a basic level, the duration time of the preliminary determination stage may be set to be 60 minutes, the duration time of the absence wind-free stage may be set to be 20 minutes, the duration time of the first absence power-saving stage may be set to be 40 minutes, and the duration time of the soft off state may be set to be 40 minutes. In a first learning level, the duration time of the preliminary determination stage may be set to be 60 minutes, the duration time of the absence wind-free stage may be set to be 15 minutes, the duration time of the first absence power-saving stage may be set to be 30 minutes, and the duration time of the soft off state may be set to be 30 minutes. In a second learning level, the duration time of the preliminary determination stage may be set to be 60 minutes, the duration time of the absence wind-free stage may be set to be 10 minutes, the duration time of the first absence power-saving stage may be set to be 20 minutes, and the duration time of the soft off state may be set to be 20 minutes. Also, in a third learning level, the duration time of the preliminary determination stage may be set to be 60 minutes, the duration time of the absence wind-free stage may be set to be 10 minutes, the duration time of the first absence power-saving stage may be set to be 10 minutes, and the duration time of the soft off state may be set to be 10 minutes.

According to an embodiment of the disclosure, a duration time of a preliminary determination stage and duration times of a plurality of intermediate operation stages according to a power saving learning level may be pre-stored in the memory 214.

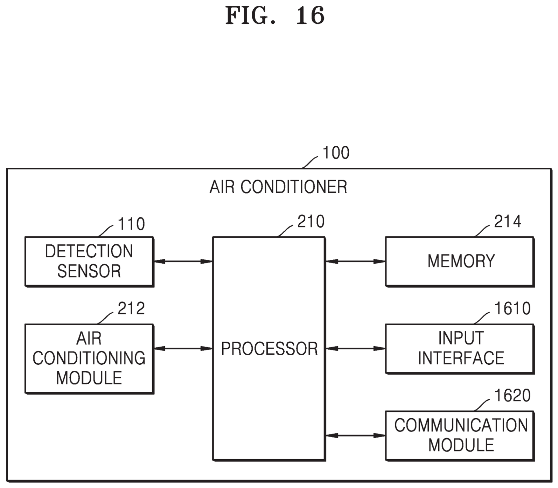

According to an embodiment of the disclosure, a duration time of a preliminary determination stage and duration times of a plurality of intermediate operation stages according to a power saving learning level may be input or modified by a user input. According to an embodiment of the disclosure, the air conditioner 100 may include an input interface (see 1610 of FIG. 16) configured to receive a user input, and may receive a user input via the input interface 1610. According to an embodiment of the disclosure, the air conditioner 100 may include a communication module (see 1620 of FIG. 16), and may receive a user input via the communication module 1620.

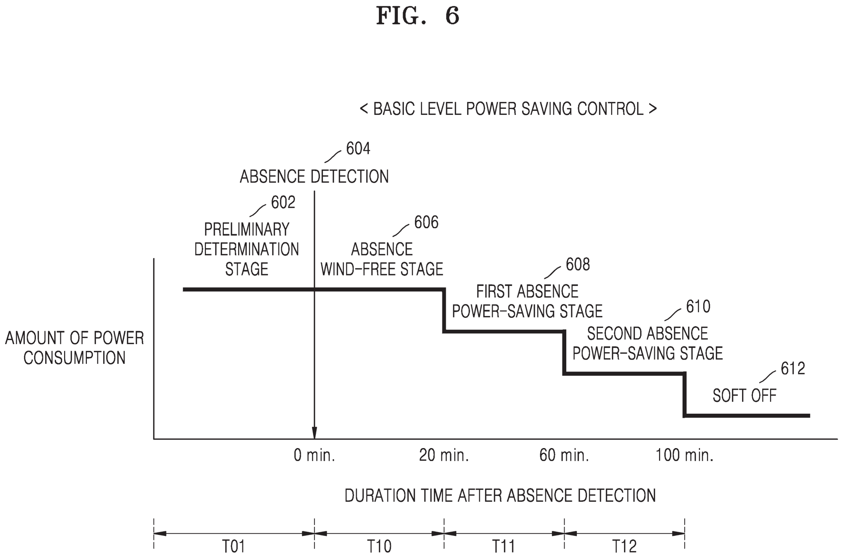

FIG. 6 is a graph illustrating a change in power consumption when power saving control is performed in a basic level, according to an embodiment of the disclosure.

According to an embodiment of the disclosure, as the air conditioner 100 performs the power saving control, the power consumption of the air conditioner 100 may be stepwise decreased. In operation 602, the air conditioner 100 performs a preliminary determination stage. When the air conditioner 100 determines that a person is absent in a target space during a duration time, according to the preliminary determination stage, the air conditioner 100 detects an absence state in operation 604.

The air conditioner 100 performs the power saving control, based on detecting the absence state. In operation 606, the air conditioner 100 performs an absence wind-free stage for T10 time (e.g.: 20 minutes). In operation 608, the air conditioner 100 performs a first absence power-saving stage for T11 time (e.g.: 40 minutes). In operation 610, the air conditioner 100 performs a second absence power-saving stage for T12 time (e.g.: 40 minutes). Based on the air conditioner 100 continuting the second absence power-saving stage for T12 time, in operation 612, the air conditioner 100 performs a soft off operation and is maintained in a soft off state.

According to an embodiment of the disclosure, the air conditioner 100 switches to a wind-free mode while changelessly maintaining a set temperature in the absence wind-free stage. The wind-free mode refers to a mode in which an air conditioning operation is performed with a wind door being closed.

According to an embodiment of the disclosure, the air conditioner 100 increases a set temperature by a reference level in the first absence power-saving stage and the second absence power-saving stage. The air conditioner 100 may increase a set temperature by a first reference level in the first absence power-saving stage, and may increase a set temperature by a second reference level in the second absence power-saving stage. The first reference level and the second reference level may be set to be values being equal to each other or different from each other. The air conditioner 100 may significantly decrease power consumption of a compressor by increasing the set temperature in the first absence power-saving stage and the second absence power-saving stage. The power consumption of the compressor occupies the highest percentage in power consumption of the air conditioner 100. Therefore, by increasing the set temperature, the air conditioner 100 may have an effect in which the power consumption of the air conditioner 100 may be significantly decreased.

According to an embodiment of the disclosure, the air conditioner 100 operates in the wind-free mode in the absence wind-free stage, and thus, allows a user to recognize that power saving control has been performed. An operation of closing the wind door in the absence wind-free stage is well visible to a user, and thus, the user may easily recognize that power saving control has been performed, by recognizing that the wind door is being closed. Also, the air conditioner 100 may significantly decrease power consumption by adjusting the set temperature in the first absence power-saving stage and the second absence power-saving stage. When the air conditioner 100 performs the soft off operation, an operation of an air conditioning module is stopped, so that power consumption may be significantly decreased.

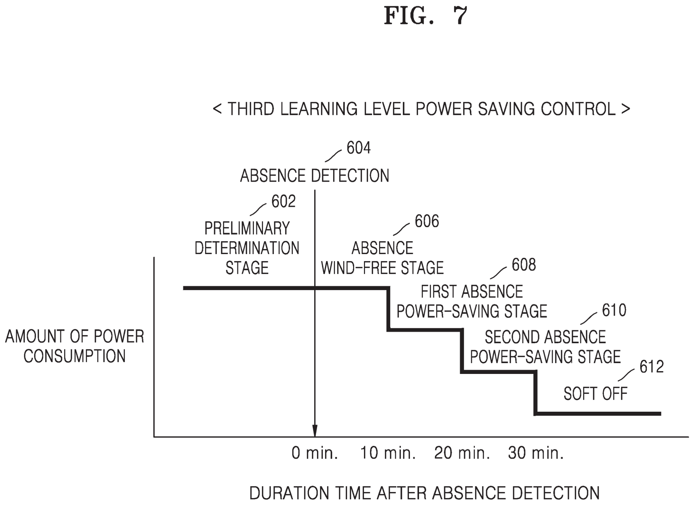

FIG. 7 is a graph illustrating an example change in power consumption when power saving control is performed in a third learning level, according to an embodiment of the disclosure.

When a power saving learning level is set to the third learning level, the air conditioner 100 may perform a preliminary determination stage, an absence wind-free stage, a first absence power-saving stage, and a second absence power-saving stage for duration times corresponding to the third learning level. For example, as illustrated in FIG. 7, the air conditioner 100 may maintain the absence wind-free stage for 10 minutes, may maintain the first absence power-saving stage for 10 minutes, and may maintain the second absence power-saving stage for 10 minutes. The air conditioner 100 may stepwise decrease power consumption of the air conditioner 100 by performing the first absence power-saving stage, the second absence power-saving stage, and a soft off operation. When operating in the third learning level, respective duration times of intermediate operation stages are short, and thus, a speed at which power consumption is decreased is faster than the basic level described with reference to FIG. 6.

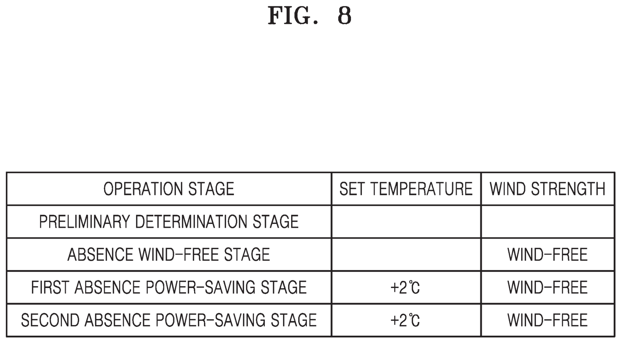

FIG. 8 is a table illustrating an example procedure for adjusting a set temperature and wind strength in each operation stage, according to an embodiment of the disclosure. FIG. 8 illustrates an example of a case in which an air conditioner corresponds to a cooler.

According to an embodiment of the disclosure, the air conditioner 100 decreases power consumption by adjusting wind strength or a set temperature in an absence wind-free stage, a first absence power-saving stage, and a second absence power-saving stage. An operation of adjusting wind strength or a set temperature is performed when a corresponding intermediate operation stage starts, and a state in which the wind strength or the set temperature is adjusted by the adjusting operation is maintained while the corresponding intermediate operation stage is performed.

According to an embodiment of the disclosure, the air conditioner 100 changelessly maintains the set temperature and the wind strength in a preliminary determination stage. For example, the air conditioner 100 may maintain the set temperature and the wind strength which were set before the preliminary determination stage is started.

The air conditioner 100 switches to a wind-free mode in the absence wind-free stage. The air conditioner 100 changelessly maintains the set temperature in the absence wind-free stage, and switches to the wind-free mode by closing a wind door. When the air conditioner 100 closes the wind door, closing of the wind door can be visually seen, and thus, there is an effect in which a user can visually recognize power saving control by the air conditioner 100. According to an embodiment of the disclosure, as the air conditioner 100 switches to the wind-free mode in a first stage of power saving control, there is an effect in which a user can easily recognize that the air conditioner 100 operates in a power saving mode.

When the air conditioner 100 already operates in the wind-free mode even before entering in the absence wind-free stage, the air conditioner 100 may maintain the wind-free mode in the absence wind-free stage.

In the first absence power-saving stage, the air conditioner 100 increases the set temperature to a first reference level, e.g., 2°C, and maintains the wind-free mode. In the second absence power-saving stage, the air conditioner 100 increases the set temperature to a second reference level, e.g., 2°C, and maintains the wind-free mode. The air conditioner 100 may significantly decrease power consumption of a compressor by increasing the set temperature in the first absence power-saving stage and the second absence power-saving stage.

When the air conditioner 100 corresponds to a heater, the air conditioner 100 may decrease the set temperature by the first reference level in the first absence power-saving stage, and may decrease the set temperature by the second reference level in the second absence power-saving stage.

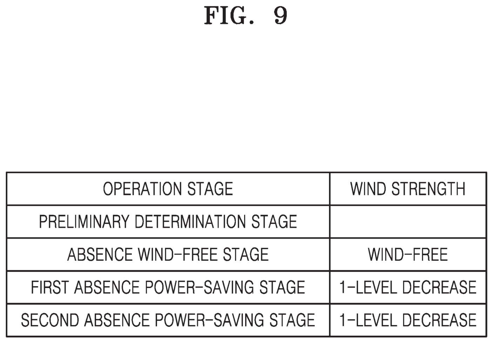

FIG. 9 is a table illustrating an example procedure for adjusting a set temperature and wind strength in each operation stage, according to an embodiment of the disclosure. FIG. 9 illustrates an example of a case in which an air conditioner corresponds to an air purifier, a humidifier, an air washer, a dehumidifier, and the like.

When the air conditioner 100 is a device that does not have a temperature adjustment function, the air conditioner 100 may decrease power consumption by adjusting wind strength in each intermediate operation stage of power saving control.

The air conditioner 100 may changelessly maintain wind strength in a preliminary determination stage.

The air conditioner 100 may switch to a wind-free mode in an absence wind-free stage. When the air conditioner 100 already operates in the wind-free mode even before entering in the absence wind-free stage, the air conditioner 100 may maintain the wind-free mode in the absence wind-free stage.

The air conditioner 100 may decrease wind strength by a reference level in each of a first absence power-saving stage and a second absence power-saving stage. For example, as illustrated in FIG. 9, the air conditioner 100 may decrease wind strength by one level in each of the first absence power-saving stage and the second absence power-saving stage.

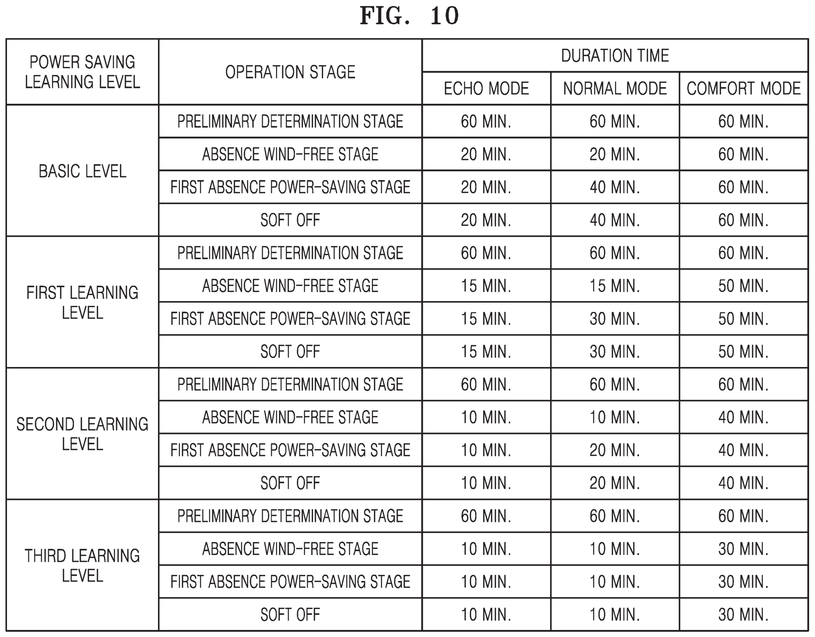

FIG. 10 is a table illustrating example duration times of a preliminary determination stage and a plurality of intermediate operation stages in each of a plurality of user-designated modes, according to an embodiment of the disclosure.

According to an embodiment of the disclosure, when the air conditioner 100 performs power saving control, the air conditioner 100 may operate in a user-designated mode set by a user from among the user-designated modes. The duration times of the preliminary determination stage and the plurality of intermediate operation stages may vary, according to each user-designated mode.

According to an embodiment of the disclosure, the user-designated modes include an echo mode, a normal mode, and a comfort mode. The duration times of the plurality of intermediate operation stages increase in order of the echo mode, the normal mode, and the comfort mode. When performing the power saving control in the echo mode, the air conditioner 100 may reach a soft off stage in a relatively short time, and thus, may obtain a fast power consumption decrease effect. On the other hand, when performing the power saving control in the comfort mode, the air conditioner 100 may prevent or reduce a case in which a comfortable environment is not provided as a set temperature is changed by the power saving control even when it is not actually an absence state because a person is absent for a moment in a target space. Therefore, in the comfort mode, there is an effect in which the power saving control by the air conditioner 100 may be performed while minimizing/reducing inconvenience of a user. The disclosure has an effect in which a user can select power saving control in a user-desired form, as a duration time of each intermediate operation stage of the power saving control is changed according to a user-designated mode selected by the user.

As illustrated in FIG. 10, for each of the plurality of user-designated modes, duration times of intermediate operation stages in each power saving learning level are preset. When a user-designated mode is set by a user input, the air conditioner 100 performs power saving control using duration times of intermediate operation stages which correspond to the set user-designated mode and correspond to a current power saving learning level.

According to an embodiment of the disclosure, even when a user-designated mode is changed, a duration time of a preliminary determination stage may be constantly maintained.

According to an embodiment of the disclosure, duration times of intermediate operation stages according to a user-designated mode may be preset and stored. Also, according to an embodiment of the disclosure, duration times of intermediate operation stages according to a user-designated mode may be set or changed by a user input. Also, according to an embodiment of the disclosure, a user-designated mode may be added or deleted by a user.

A duration time of a soft off state may vary according to each user-designated mode.

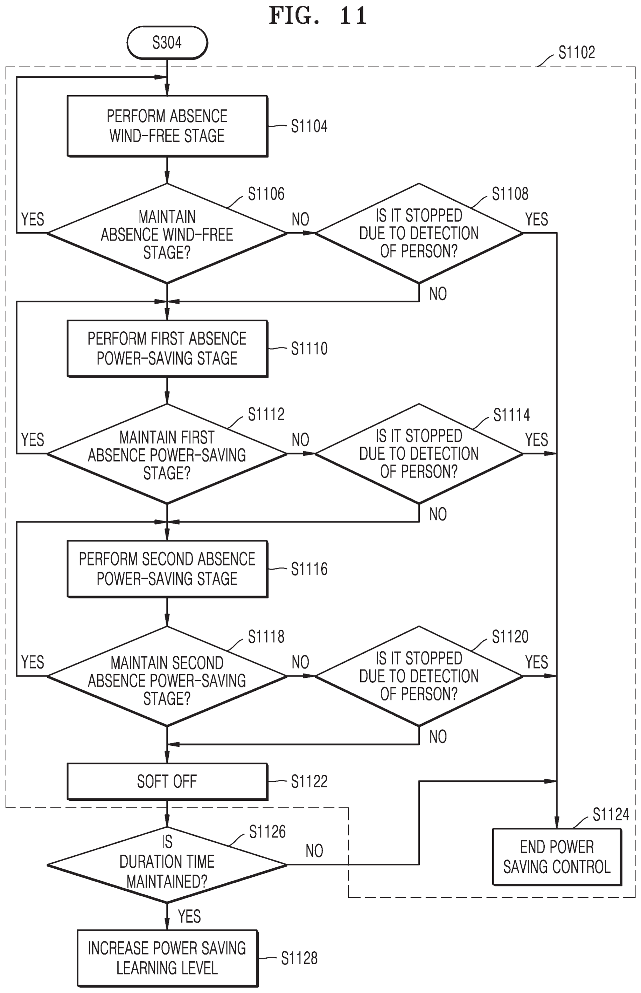

FIG. 11 is a flowchart illustrating an example procedure for performing power saving control and increasing a power saving learning level, according to an embodiment of the disclosure.

According to an embodiment of the disclosure, the air conditioner 100 may perform power saving control in operation S1102, and may increase a power saving learning level, based on a power saving control history, in operation S1126. The air conditioner 100 may perform the power saving control in operation S1102, and may increase the power saving learning level in operation S1126 when the air conditioner 100 enters a soft off state.

Operation S1102 will now be described.

When the air conditioner 100 determines to perform power saving control in operation S304 described above with reference to FIG. 3, the air conditioner 100 performs an absence wind-free stage in operation S1104.

While the air conditioner 100 performs the absence wind-free stage, the air conditioner 100 determines whether to maintain the absence wind-free stage, in operation S1106. The air conditioner 100 determines whether to maintain the absence wind-free stage, by determining whether an absence time after entering of the absence wind-free stage has reached a duration time of the absence wind-free stage. The absence time is counted, based on a sensor detection value of the detection sensor 110 while the air conditioner 100 operates.

When the absence time has reached the duration time of the absence wind-free stage or a person is detected, the air conditioner 100 determines not to maintain the absence wind-free stage.

In S1108, the air conditioner 100 determines whether the absence wind-free stage is stopped due to detection of a person. When the absence wind-free stage is stopped due to detection of a person, the air conditioner 100 ends power saving control in operation S1124.

When the absence time has reached the duration time of the absence wind-free stage, in operation S1110, the air conditioner 100 performs a first absence power-saving stage.

While performing the first absence power-saving stage, in operation S1112, the air conditioner 100 determines whether to maintain the first absence power-saving stage. The air conditioner 100 determines whether to maintain the first absence power-saving stage, by determining whether an absence time after the start of the first absence power-saving stage has reached a duration time of the first absence power-saving stage. The absence time is counted based on a sensor detection value of the detection sensor 110 while the air conditioner 100 operates.

When the absence time has reached the duration time of the first absence power-saving stage or a person is detected, the air conditioner 100 determines not to maintain the first absence power-saving stage. In operation S1114, the air conditioner 100 determines whether the first absence power-saving stage is stopped due to detection of a person. When the first absence power-saving stage is stopped due to detection of a person, the air conditioner 100 ends power saving control in operation S1124.

When the absence time has reached the duration time of the first absence power-saving stage, the air conditioner 100 performs a second absence power-saving stage in operation S1116.

While performing the second absence power-saving stage, in operation S1118, the air conditioner 100 determines whether to maintain the second absence power-saving stage. The air conditioner 100 determines whether to maintain the second absence power-saving stage, by determining whether an absence time after the start of the second absence power-saving stage has reached a duration time of the second absence power-saving stage. The absence time is counted based on a sensor detection value of the detection sensor 110 while the air conditioner 100 operates.

When the absence time has reached the duration time of the second absence power-saving stage or a person is detected, the air conditioner 100 determines not to maintain the second absence power-saving stage. In operation S1120, the air conditioner 100 determines whether the second absence power-saving stage is stopped due to detection of a person. When the second absence power-saving stage is stopped due to detection of a person, the air conditioner 100 ends power saving control in operation S1124.

When the absence time has reached the duration time of the second absence power-saving stage, the air conditioner 100 performs soft off in operation S1122.

In operation S1126, the air conditioner 100 determines whether a soft off state is maintained for a duration time. When the soft off state is maintained for the duration time, the air conditioner 100 increases a power saving learning level in operation S1128. For example, when the air conditioner 100 currently operates at a basic level, the air conditioner 100 increases the power saving learning level to a first learning level in operation S1128. Operation S1128 of FIG. 11 may correspond to or include operation of setting one level from among a plurality of power saving learning levels in operation S306 of FIG. 3.

When the soft off state is ended before the duration time, due to detection of a person, the air conditioner 100 proceeds to operation S1124, ends the power saving control, and returns to a normal operation.

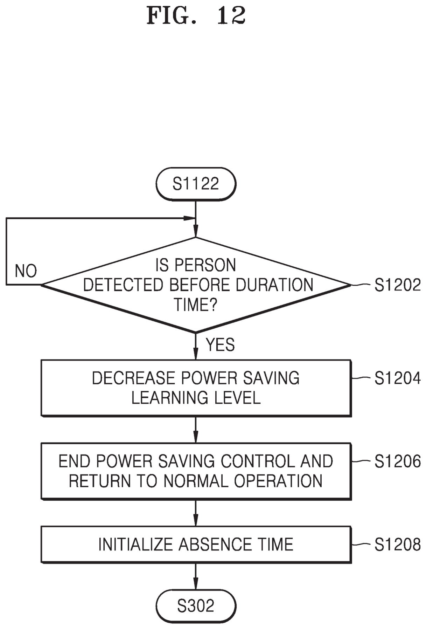

FIG. 12 is a flowchart illustrating an example procedure for performing power saving control and decreasing a power saving learning level, according to an embodiment of the disclosure.

When the air conditioner 100 that operates in a soft off state wakes up because a person is detected before a duration time of the soft off state is expired, the air conditioner 100 may increase duration times of a plurality of intermediate operation stages by decreasing a power saving learning level.

Referring to FIG. 12, when the air conditioner 100 performed soft off by power saving control in operation S1122, the air conditioner 100 operates in the soft off state. In operation S1202, the air conditioner 100 determines whether a person is detected before a duration time of the soft off state is expired. The air conditioner 100 detects a person, based on a sensor detection value of the detection sensor 110.

In operation S1202, when the air conditioner 100 detected a person before the duration time of the soft off state, in operation S1204, the air conditioner 100 decreases the power saving learning level. As the power saving learning level is decreased, a duration time of an intermediate operation stage is increased.

In operation S1206, the air conditioner 100 ends power saving control, and returns to a normal operation. The air conditioner 100 in the soft off state wakes up, and thus, ends the power saving control. The air conditioner 100 operates with a set temperature and wind strength which were set before the power saving control.

In operation S1208, the air conditioner 100 initializes an absence time. Based on a person being detected, the air conditioner 100 initializes the absence time to 0.

The air conditioner 100 proceeds to operation S302 described with reference to FIG. 3, and performs detection of a person in a target space using the sensor detection value of the detection sensor 110.

Operation S1204 of FIG. 12 may correspond to an operation of setting one level from among a plurality of power saving learning levels according to a performance history of a plurality of intermediate operation stages. An order of operations S1204, S1206, and S1208 in FIG. 12 is not limited to an order shown in FIG. 12. Operations S1204, S1206, and S1208 may be performed in parallel or may be performed in an order different from the order shown in FIG. 12.

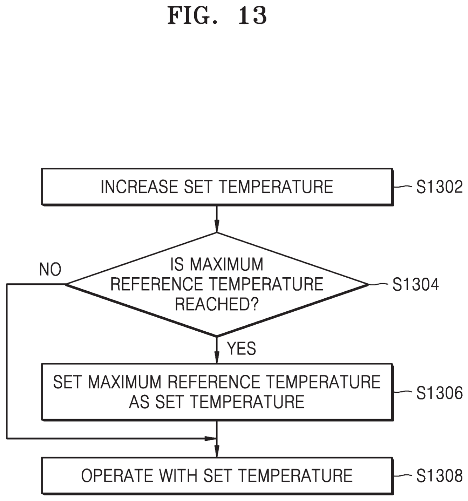

FIG. 13 is a flowchart illustrating an example procedure for adjusting a set temperature during power saving control, according to an embodiment of the disclosure.

According to an embodiment of the disclosure, when the set temperature reaches a maximum reference temperature during the power saving control, the air conditioner 100 may stop adjusting the set temperature. In a case where the air conditioner 100 is a cooler, when the set temperature is set too high (e.g., set to 29°C) during the power saving control, the air conditioner 100 may be set with the set temperature that is not appropriate for cooling. In a case where the air conditioner 100 is a heater, when the set temperature is set too low (e.g., set to 18°C) during the power saving control, the air conditioner 100 may be set with the set temperature that is not appropriate for heating. According to an embodiment of the disclosure, it is possible to prevent or reduce a set temperature being set to an inappropriate temperature, while the air conditioner 100 performs the power saving control.

Operations S1302, S1304, S1306, and S1308 of FIG. 13 may be performed while operation S310 of FIG. 3 is performed or operation S1102 of FIG. 11 is performed.

Referring to FIG. 13, in operation S1302, the air conditioner 100 may increase a set temperature by power saving control. For example, when the air conditioner 100 enters a first absence power-saving stage or a second absence power-saving stage, the air conditioner 100 may increase the set temperature by 2°C.

In operation S1304, the air conditioner 100 determines whether the increased set temperature has reached a maximum reference temperature. When the increased set temperature is equal to the maximum reference temperature or is greater than the maximum reference temperature, the air conditioner 100 determines that the increased set temperature has reached the maximum reference temperature. The maximum reference temperature may be a preset value. According to an embodiment of the disclosure, the maximum reference temperature may be set by a user input.

When the air conditioner 100 determines that the increased set temperature has reached the maximum reference temperature, in operation 1306, the air conditioner 100 sets the maximum reference temperature as the set temperature. For example, when the increased set temperature in operation S1302 is 30°C, and the maximum reference temperature is 29°C, the air conditioner 100 sets the set temperature to 29°C that is the maximum reference temperature.

When the air conditioner 100 determines that the increased set temperature has not reached the maximum reference temperature, the air conditioner 100 changelessly uses the increased set temperature.

In operation S1308, the air conditioner 100 operates with the set temperature.

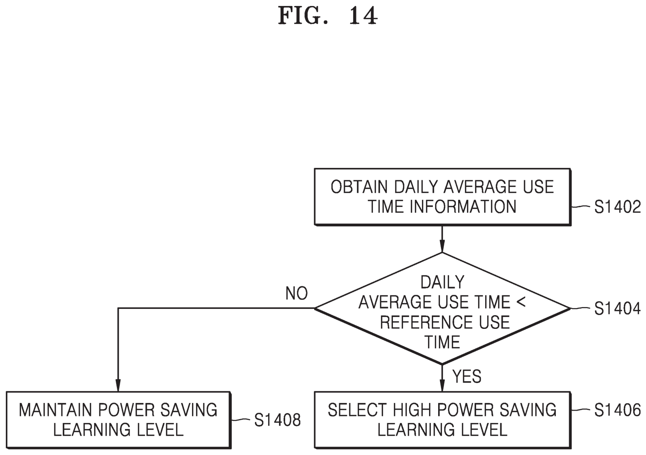

FIG. 14 is a flowchart illustrating an example procedure for adjusting a power saving learning level according to use time information of a user, according to an embodiment of the disclosure.

According to an embodiment of the disclosure, a power saving learning level may be set using use time statistics of the user. A daily average use time of a cooler of a normal user is approximately 8 to 10 hours. However, in a case where a user uses a cooler for an average of an hour or less per day, when the power saving learning level is set to a basic level, a duration time of power saving control is longer than a user's total use time per day. In this case, the power saving control is not appropriate for a use pattern of the user. According to an embodiment of the disclosure, when a daily average use time of a user is less than a reference use time, the air conditioner 100 may set the power saving learning level to a high degree, and thus, may perform the power saving control according to a use pattern of the user.

Referring to FIG. 14, in operation S1402, the air conditioner 100 obtains daily average use time information of the air conditioner 100 which indicates a time during which the air conditioner 100 is used on average per day. The air conditioner 100 obtains daily average use time information for a device corresponding thereto. When the air conditioner 100 includes a plurality of indoor units, the air conditioner 100 may obtain daily average use time information for each of the indoor units. In order to calculate a daily average use time of the air conditioner 100, the air conditioner 100 may collect daily use time information during a preset period. For example, the air conditioner 100 may collect daily use time information of one week after installation of a device, and may calculate a daily average use time. A daily use time indicates a time during which the air conditioner 100 is turned on and operates per day. According to an embodiment of the disclosure, the daily use time may be calculated excluding a soft off time. Also, according to an embodiment of the disclosure, the daily use time may be calculated including a soft off time.

When the daily average use time information is obtained, in operation S1404, the air conditioner 100 determines whether a daily average use time is less than a reference use time. The reference use time may be a preset value. For example, the reference use time may be set to one hour.

When the daily average use time is less than the reference use time, in operation S1406, the air conditioner 100 may select a preset high power saving learning level. For example, when the daily average use time is less than one hour that is the reference use time, the air conditioner 100 may set a third learning level, regardless of a performance history of an intermediate operation stage.

When the daily average use time is equal to or greater than the reference use time, in operation S1408, the air conditioner 100 may maintain an existing power saving learning level determined based on a performance history of an intermediate operation stage.

According to an embodiment of the disclosure, the air conditioner 100 may set a lowest power saving learning level according to the daily average use time. For example, when the daily average use time is less than two hours, the air conditioner 100 may set a power saving learning level to a second learning level or higher. In this case, the air conditioner 100 sets the power saving learning level to the second learning level or a third learning level, according to a performance history of an intermediate operation stage. When the daily average use time is less than two hours, the air conditioner 100 may not set the power saving learning level to a basic level or a first learning level. Also, for example, when the daily average use time is less than three hours, the air conditioner 100 may set the power saving learning level to the first learning level or higher.

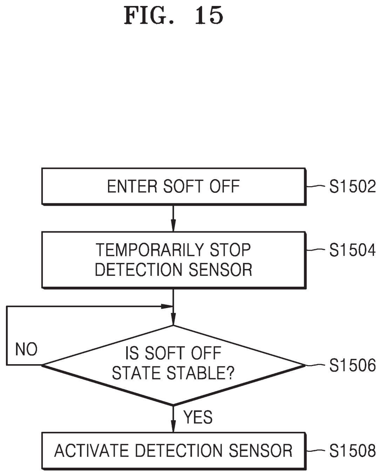

FIG. 15 is a flowchart illustrating an example procedure for controlling a detection sensor while performing soft off, according to an embodiment of the disclosure.

According to an embodiment of the disclosure, the air conditioner 100 may temporarily turn off the detection sensor 110 while performing a soft off operation. When the soft off operation is performed, a vibration may occur in the air conditioner 100. When the soft off operation is performed, the vibration may occur in the air conditioner 100, due to an operation of switching the conditioning module 212 to a turn off state. When the vibration occurs in the air conditioner 100, a change may occur in a sensor detection value of the detection sensor 110, as the detection sensor 110 vibrates. In this case, due to the change in the sensor detection value of the detection sensor 110, the air conditioner 100 may incorrectly determine that a person is present in a target space even when the person is absent there. According to an embodiment of the disclosure, in order to prevent or reduce the air conditioner 100 incorrectly determining that a person is present in a target space, due to the vibration caused by the soft off operation, the detection sensor 110 may be temporarily inactivated while the soft off operation is performed.

Referring to FIG. 15, in operation S1502, the air conditioner 100 enters a soft off operation. Operation S1502 indicates operation in which the air conditioning module 212 performs an air conditioning operation and then switches to a turn off state.

In operation S1504, the air conditioner 100 temporarily stops the detection sensor 110. For example, the air conditioner 100 may inactivate the detection sensor 110. As the detection sensor 110 is temporarily stopped, the detection sensor 110 may not generate a sensor detection value. Also, in a soft off state, the detection sensor 110 may not temporarily deliver a sensor detection value to the processor 210.

In the soft off state, the processor 210 may operate not to store a sensor detection value received from the detection sensor 110 or not to use the sensor detection value. As the detection sensor 110 is temporarily stopped, the air conditioner 100 may stop a process of performing detection of a person using the sensor detection value. The air conditioner 100 may temporarily stop the detection sensor 110 by blocking an activation signal or a power voltage which is input to the detection sensor 110.

In operation S1506, the air conditioner 100 determines whether the soft off operation is completed and the air conditioner 100 is stable in a soft off state. That the air conditioner 100 is stable may refer, for example, to a state in which the air conditioner 100 reaches the soft off state and satisfies a preset condition. For example, the state in which the preset condition is satisfied indicates a state in which a preset time (e.g., 5 seconds) is elapsed after the air conditioner 100 reaches the soft off state. For example, the state in which the preset condition is satisfied indicates a state in which a vibration of the air conditioner 100 falls under a reference value.

When the air conditioner 100 becomes stable after the soft off operation, in operation S1508, the air conditioner 100 reactivates the detection sensor 110. That is, the air conditioner 100 releases a temporary stop state of the detection sensor 110. The air conditioner 100 may activate the detection sensor 110 by supplying again an activation signal or supplying a power voltage to the detection sensor 110. When the detection sensor 110 is activated, the air conditioner 100 may perform a process of detecting a person using a sensor detection value of the detection sensor 110. Also, the air conditioner 100 in the soft off state in which the soft off operation is completed may maintain a state in which the air conditioning module 212 is stopped and the detection sensor 110 is activated.

FIG. 16 is a block diagram illustrating an example configuration of an air conditioner according to an embodiment of the disclosure.

In order to prevent and/or reduce redundancy of descriptions in FIG. 16, descriptions that are redundant to the air conditioner 100 which are provided in FIG. 2 may not be repeated here, and a difference therebetween will be mainly described.

The air conditioner 100 according to an embodiment of the disclosure includes the detection sensor 110, the processor 210, the air conditioning module 212, the memory 214, the input interface (e.g., including input circuitry) 1610, and the communication module (e.g., including communication circuitry) 1620. While FIG. 16 illustrates an embodiment in which the air conditioner 100 includes both the input interface 1610 and the communication module 1620, an embodiment in which the air conditioner 100 includes only one of the input interface 1610 and the communication module 1620 is available.

The air conditioner 100 may receive various types of a user input via the input interface 1610 or the communication module 1620.

The input interface 1610 may include various input circuitry and receives an input from a user. The input interface 1610 may include a key, a touch screen, a touch pad, a touch sensor, or the like. The input interface 1610 receives and delivers a user input to the processor 210. The input interface 1610 may receive a power on/off signal, a temperature setting signal, an operation mode selection signal, a wind-blowing strength selection signal, a sleep-mode scheduling signal, a scheduled operation setting signal, a wind direction setting signal, or the like.

According to an embodiment of the disclosure, the input interface 1610 may receive a user input of selecting a user-designated mode. Also, according to an embodiment of the disclosure, the input interface 1610 may receive a user input of setting an absence schedule.

The communication module 1620 may include various communication circuitry and communicate with at least one external device by wire or wirelessly. According to an embodiment of the disclosure, the communication module 1620 communicates with a remote controller by wirelessly. The communication module 1620 may receive, from the remote controller, a power on/off signal, a temperature setting signal, an operation mode selection signal, a wind-blowing strength selection signal, a sleep-mode scheduling signal, a scheduled operation setting signal, a wind direction setting signal, or the like. In order to synchronize state information of the air conditioner 100 with the remote controller, the communication module 1620 may transmit the state information of the air conditioner 100 to the remote controller.

According to an embodiment of the disclosure, the communication module 1620 may receive a user input of selecting a user-designated mode. Also, according to an embodiment of the disclosure, the communication module 1620 may receive a user input of setting an absence schedule.

According to an embodiment of the disclosure, the communication module 1620 may communicate with an outdoor unit. For example, the communication module 1620 may communicate with the outdoor unit using RS-485 serial communication.

According to an embodiment of the disclosure, the communication module 1620 may communicate with a server via a network. The communication module 1620 may access the network via an access point (AP) device and communicate with the server. The communication module 1620 may receive, from the server, the user input of selecting a user-designated mode or the user input of setting an absence schedule. Also, the communication module 1620 may receive, from the server, a power on/off signal, a temperature setting signal, an operation mode selection signal, a wind-blowing strength selection signal, a sleep-mode scheduling signal, a scheduled operation setting signal, a wind direction setting signal, or the like. In order for the communication module 1620 to synchronize the state information of the air conditioner 100 with the server, the communication module 1620 may transmit the state information of the air conditioner 100 to the server. Also, the communication module 1620 may receive, from the server, an operation mode, setting information, etc. of the air conditioner 100 which are set using a user terminal, etc.

The communication module 1620 may include a wireless communication module (e.g., a cellular communication module, a short-range wireless communication module, or a global navigation satellite system (GNSS) communication module) or a wired communication module (e.g., a LAN communication module or a power line communication (PLC) module). In addition, the communication module 1620 may perform short-range communication using, for example, Bluetooth, BLE, NFC, Wi-Fi, ZigBee, IrDA communication, WFD, UWB, Ant+ communication, etc. Furthermore, for example, the communication module 1620 may perform long-range communication, and communicate with an external device over, for example, a legacy cellular network, a fifth generation (5G) network, a next-generation communication network, the Internet, or a computer network (e.g., a LAN or WAN).

For example, the communication module 1620 may perform mobile communication, and transmit or receive a wireless signal to or from at least one of a base station, an external terminal, or a server on a mobile communication network.

According to an embodiment of the disclosure, the communication module 1620 is connected to an AP in the home via Wi-Fi communication. The communication module 1620 may communicate with an external device via the AP.

According to an embodiment of the disclosure, the air conditioner 100 obtains absence schedule information set by a user, and adjusts a power saving learning level, based on the set absence schedule information.

An absence schedule may refer to a schedule designated by the user, and indicates a time period in which the user is absent from a target space. For example, the absence schedule may be designated from 9:00 a.m. to 3:00 p.m. The absence schedule may be set in a manner that the user designates the start and the end of the time period. According to an embodiment of the disclosure, the absence schedule may be designated with a day of the week or a date. Also, according to an embodiment of the disclosure, the absence schedule may be designated for a plurality of time periods.

When a time to perform power saving control corresponds to the absence schedule, the air conditioner 100 may operate at a power saving learning level being higher than a power saving learning level determined based on an absence time. According to an embodiment of the disclosure, when a time to perform power saving control corresponds to the absence schedule, the air conditioner 100 may operate at a level being one higher than a level determined based on a performance history of a plurality of intermediate operation stages. According to an embodiment of the disclosure, when a time to perform power saving control corresponds to the absence schedule, the air conditioner 100 may operate at a designated high power saving learning level. For example, according to an embodiment of the disclosure, when a time to perform power saving control corresponds to the absence schedule, the air conditioner 100 may operate at a third learning level, regardless of a performance history of an intermediate operation stage.

According to an embodiment of the disclosure, if the current time corresponds to the absence schedule, the air conditioner 100 may not perform a preliminary determination stage and may perform power saving control. For example, when the air conditioner 100 is turned on during a time period corresponding to the absence schedule, the air conditioner 100 may operate in a mode of performing power saving control without a preliminary determination stage. Therefore, when the air conditioner 100 is turned on during a time corresponding to the absence schedule, the air conditioner 100 may immediately operate in an absence wind-free stage, and a when a person is detected, the air conditioner 100 may stop power saving control and may operate in a normal mode.

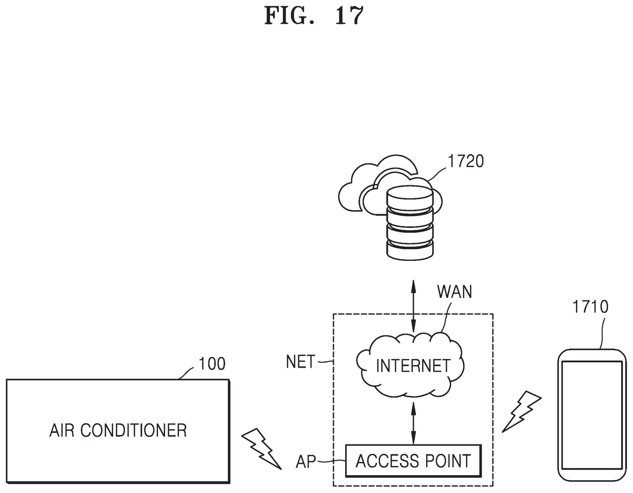

FIG. 17 is a diagram illustrating an air conditioner, an external device, and a server, according to an embodiment of the disclosure.

According to an embodiment of the disclosure, the air conditioner 100 communicates with an external device 1710 and a server 1720 via a communication module (not shown). The air conditioner 100 may be connected to other home appliance, the external device 1710, or the server 1720 via a network NET.

The server 1720 may manage user account information and information of the air conditioner 100 connected to a user account. For example, a user may generate a user account by accessing the server 1720 via the external device 1710. The user account may be identified by identification (ID) and a password set by the user. The server 1720 may register the air conditioner 100 to the user account via a set procedure. For example, the server 1720 may register the air conditioner 100 by connecting identification information (e.g., a serial number or a medium access control (MAC) address) of the air conditioner 100 to the user account.

The external device 1710 may include a communication module capable of communicating with the air conditioner 100 and the server 1720, a user interface configured to receive a user input or output information to a user, at least one processor 210 configured to control an operation of the external device 1710, and at least one memory storing a program for controlling an operation of the external device 1710.

The external device 1710 may be carried by a user or may be arranged in home or an office of the user. For example, the external device 1710 may include, but is not limited to, a person computer, a terminal, a portable telephone, a smart phone, a handheld device, a wearable device, etc.

The memory of the external device 1710 may store therein a program (e.g., an application) for controlling the air conditioner 100. The external device 1710 may be sold in a state in which an application for controlling the air conditioner 100 is installed therein, or may be sold in a not-installed state. When the external device 1710 is sold in the state in which an application for controlling the air conditioner 100 is not installed therein, a user may download the application from an external server providing the application and may install the application in the external device 1710.

The user may control the air conditioner 100 using the application installed in the external device 1710. When the user executes the application installed in the external device 1710, identification information of the air conditioner 100 connected to the same user account as the external device 1710 may be displayed on an execution screen of the application. The user may perform desired control on the air conditioner 100 via the execution screen of the application. When the user inputs a control command with respect to the air conditioner 100 via the execution screen of the application, the external device 1710 may directly transmit the control command to the air conditioner 100 through a short-range network, or may transmit the control command to the air conditioner 100 by passing through the server 1720.

The application of the external device 1710 may receive various user inputs for controlling the air conditioner 100. The application provides a graphical user interface (GUI) for receiving various user inputs, and receives a user input via the GUI. While communicating with the server 1720, the external device 1710 updates the state information of the air conditioner 100 and provides it via the application. Also, while communicating with the server 1720, the external device 1710 transmits a user input received via the application to the air conditioner 100.

The application may receive a power off signal or a scheduled-end signal of the air conditioner 100. The application may receive a schedule setting signal, and may receive a user input of setting a scheduled-end signal. The application may receive a sleep mode setting signal, and may receive a user input of setting a scheduled-end signal. The application may receive a user input of setting a denoise mode. The application may receive a user input of setting an automatic dry function. Also, the application may receive a user input of setting a wind-free mode.

The application may receive a user input of selecting a user-designated mode. According to an embodiment of the disclosure, the application may receive a user input of setting an absence schedule.

The network NET may include both a wired network and a wireless network. The wired network may include a cable network, a phone network, etc., and the wireless network may include all networks that transmit and receive signals via radio waves. The wired network and the wireless network may be connected to each other.

The network NET may include a WAN such as Internet, a LAN formed around an AP, and a short-range wireless network (e.g., a wireless personal area network (WPAN)) that does not pass through the AP. The short-range wireless network may include, but is not limited to, Bluetooth^{™} (IEEE 802.15.1), ZigBee (IEEE 802.15.4), WFD, NFC, Z-Wave, etc.

The AP may connect a LAN to which the air conditioner 100 and the external device 1710 are connected to a WAN to which the server 1720 is connected. The conditioner 100 or the external device 1710 may be connected to the server 1720 via the WAN.

The AP may include a device for connecting devices using related standard using Wi-Fi in a computer network.

According to an embodiment of the disclosure, the AP may include an AP implemented as hardware and an AP implemented as software.

For example, the AP may relay data between a wired device on a network and a wireless device. However, the disclosure is not limited thereto, and the AP may relay data between wired devices or may relay data between wireless devices. The AP may also be referred to as a relay device.

The AP may communicate with the air conditioner 100 and the external device 1710 using wireless communication such as Wi-Fi^{™} (IEEE 802.11), and may access the WAN using wired communication.

The air conditioner 100 may transmit information about an operation or a state to the server 1720 via the network NET. For example, the air conditioner 100 may transmit information about an operation or a state to the server 1720 via a Wi-Fi^{™} (IEEE 802.11) communication.

When a Wi-Fi communication module is not included in the air conditioner 100, the air conditioner 100 may transmit the information about the operation or the state to the server 1720 via other electronic device having a Wi-Fi communication module. For example, when the air conditioner 100 transmits the information about the operation or the state to other home appliance via a short-range wireless network (e.g., BLE communication), the other home appliance may transmit the information about the operation or the state to the server 1720. For example, when a Wi-Fi communication module is not included in the air conditioner 100, the air conditioner 100 may be connected to a communication relay device by wire, and may perform 485 communication with Wi-Fi communication by the communication relay device.

The air conditioner 100 may transmit information about an operation or a state of the air conditioner 100 to the server 1720, according to pre-approval by a user. Transmission of information to the server 1720 may be performed when a request is received from the server 1720 or when a particular event occurs in the air conditioner 100, and may be performed periodically or in real time.

When the information about the operation or the state is received from the air conditioner 100, the server 1720 may update pre-stored information related to the air conditioner 100. The server 1720 may transmit the information about the operation or the state of the air conditioner 100 to the external device 1710 via the network NET.

When a request is received from the external device 1710, the server 1720 may transmit the information about the operation or the state of the air conditioner 100 to the external device 1710. For example, when a user executes an application that is in the external device 1710 and is connected to the server 1720, the external device 1710 may request the server 1720 for the information about the operation or the state of the air conditioner 100 via the application and may receive the information. When the information about the operation or the state is received from the air conditioner 100, the server 1720 may deliver the information about the operation or the state of the air conditioner 100 in real time to the external device 1710. The server 1720 may periodically deliver the information about the operation or the state of the air conditioner 100 to the external device 1710. The external device 1710 may display the information about the operation or the state of the air conditioner 100 on an execution screen of the application, and thus, may deliver the information about the operation or the state of the air conditioner 100 to a user.

The air conditioner 100 may obtain various information from the server 1720, and may provide the obtained information to a user. The air conditioner 100 may receive, from the server 1720, a file for updating pre-installed software or data related to the pre-installed software, and may update the pre-installed software or the data related to the pre-installed software, based on the received file.

The air conditioner 100 may operate according to a control command received from the server 1720. For example, when the air conditioner 100 has obtained pre-approval by a user with respect to an operation being available according to a control command from the server 1720, the air conditioner 100 may operate according to the control command received from the server 1720. The control command received from the server 1720 may include, but is not limited to, a control command input by a user via the external device 1710 or a control command generated by the server 1720 based on a preset condition.

According to an embodiment of the disclosure, the server 1720 may perform at least one of operations S304, S306, S308, or S310 of the flowchart of FIG. 3.

According to an embodiment of the disclosure, operation S302 of FIG. 3 may be performed by the air conditioner 100. The air conditioner 100 may detect a person from a target space using a sensor detection value of the detection sensor 110. The air conditioner 100 may transmit a person detection result to the server 1720.

According to an embodiment of the disclosure, operation S302 of FIG. 3 may be performed by the air conditioner 100 and the server 1720. The air conditioner 100 may obtain the sensor detection value of the detection sensor 110 and may transmit the obtained sensor detection value to the server 1720. The server 1720 may perform person detection processing using the received sensor detection value. In descriptions below, it is possible to combine an embodiment in which it is described that operation S302 is performed by the air conditioner 100 with an embodiment in which operation S302 is performed by the air conditioner 100 and the server 1720.

According to an embodiment of the disclosure, operation S302 of FIG. 3 may be performed by the air conditioner 100, and operations S304, S306, S308, and S310 may be performed by the server 1720. The server 1720 may receive a person detection result of operation S302 from the air conditioner 100, and may determine whether to perform power saving control in operation S304, based on the received person detection result. The server 1720 may perform a preliminary determination stage, based on the person detection result, and thus, may perform power saving control. Also, when it is determined to perform power saving control, in operation S306, the server 1720 may set one power saving learning level from among a plurality of power saving learning levels according to a performance history of a plurality of intermediate operation stages. Also, the server 1720 may adjust respective duration times of the plurality of intermediate operation stages, according to the set learning level in operation S308. Also, the server 1720 may generate and transmit a control signal to the air conditioner 100 to adjust wind strength or a set temperature through the plurality of intermediate operation stages according to the absence time in operation S310.

According to an embodiment of the disclosure, operation S302 and S304 of FIG. 3 are performed by the air conditioner 100, and operations S306, S308, and S310 may be performed by the server 1720. In operation S302, the air conditioner 100 may detect a person from the target space 120, based on the sensor detection value of the detection sensor 110. The air conditioner 100 may determine whether to perform power saving control in operation S304, based on the person detection result from the target space 120. When it is determined to perform power saving control, the air conditioner 100 may request the server 1720 for power saving control, and may transmit the person detection result to the server 1720. The server 1720 may perform power saving control, based on the person detection result received from the air conditioner 100. The server 1720 may set one power saving learning level from among the plurality of power saving learning levels according to the performance history of the plurality of intermediate operation stages in operation S306, based on the person detection result. The server 1720 may adjust respective duration times of the plurality of intermediate operation stages according to the set learning level in operation S308. In operation S310, the server 1720 may control the air conditioner 100 to adjust wind strength or a set temperature through the plurality of intermediate operation stages, according to the absence time determined based on the person detection result.

According to an embodiment of the disclosure, operation S302 may be performed by the air conditioner 100, operation S304 may be performed by the air conditioner 100 or the server 1720, operations S306 and S308 may be performed by the server 1720, and operation S310 may be performed by the air conditioner 100. When the server 1720 or the air conditioner 100 determines to perform power saving control in operation S304, the server 1720 may set one level from among the plurality of power saving learning levels according to the performance history of the plurality of intermediate operation stages in operation S306. The server 1720 may adjust respective duration times of the plurality of intermediate operation stages according to the set power saving learning level in operation S308. The server 1720 may transmit information about the respective duration times of the plurality of intermediate operation stages to the air conditioner 100. Based on the respective duration times of the plurality of intermediate operation stages received from the server 1720, in operation S310, the air conditioner 100 may adjust wind strength or a set temperature through the plurality of intermediate operation stages, according to the absence time.

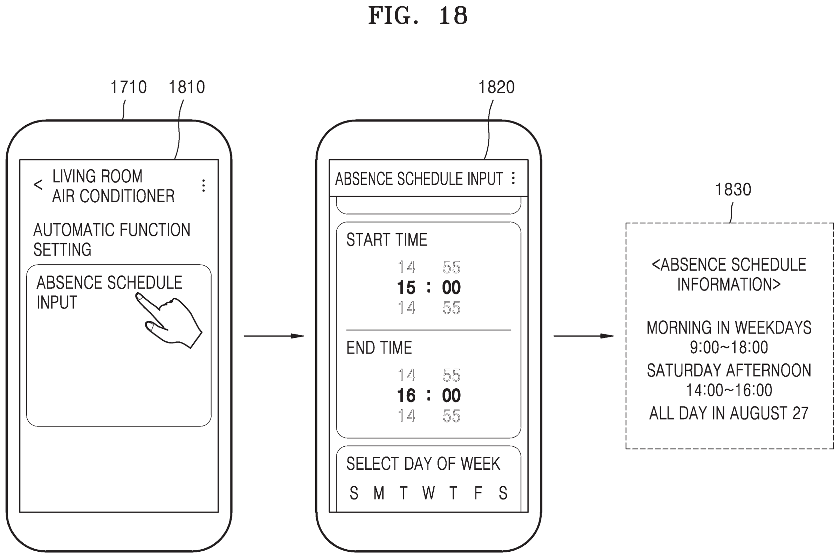

FIG. 18 is a diagram illustrating an example procedure for inputting an absence schedule via an external device, according to an embodiment of the disclosure.

According to an embodiment of the disclosure, a user may input an absence schedule of the user via an application of the external device 1710. The air conditioner 100 may receive, from the server 1720, the absence schedule of the user input via the application of the external device 1710.

According to an embodiment of the disclosure, the application of the external device 1710 provides a first GUI view 1810 for inputting an absence schedule. The user may select a menu for inputting an absence schedule via the first GUI view 1810.

According to an embodiment of the disclosure, the absence schedule is a schedule during which the user is absent from home. That is, the absence schedule is not limited to the air conditioner 100 but is applied to all home appliances in home registered in the server 1720. The air conditioner 100 may obtain absence schedule information from a home absence schedule.

According to an embodiment of the disclosure, the absence schedule may be an absence schedule with respect to the air conditioner 100. The user may input an absence schedule for each of home appliances.

When the absence schedule input menu is selected, the external device 1710 provides a menu for selecting an absence schedule from a second GUI view 1820. The external device 1710 may receive an input of a start time, an end time, a day of the week, a date, etc. which are of an absence schedule via the second GUI view 1820. An absence schedule may be defined by designating a day of the week or weekdays/weekend. An absence schedule may be defined by designating a date. An absence schedule may be repetitively set with a preset pattern. Also, an absence schedule may be temporarily set for a particular day.

According to an embodiment of the disclosure, an absence schedule may be defined by designating a room or an area in home. When the absence schedule is defined by designating a room or an area in home, the air conditioner 100 may obtain the absence schedule for the room or the area in which the air conditioner 100 is installed.

When an absence schedule input by the user is completed, absence schedule information 1830 is generated and transmitted to the server 1720. The server 1720 may transmit the absence schedule information 1830 to the air conditioner 100.

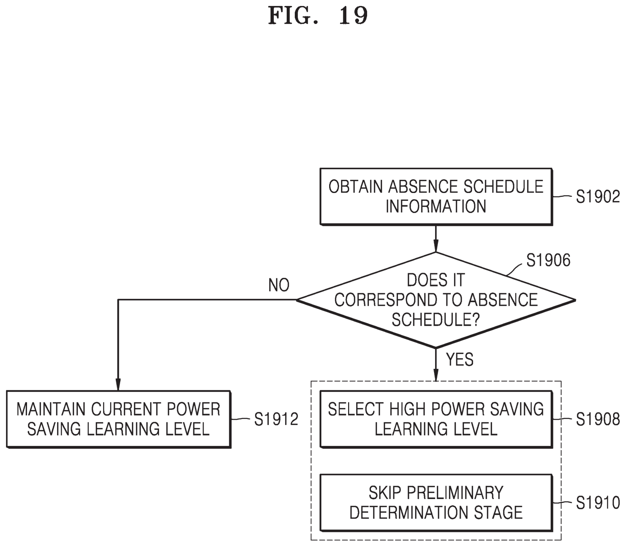

FIG. 19 is a flowchart illustrating an example procedure in which an air conditioner operates based on an absence schedule, according to an embodiment of the disclosure.

According to an embodiment of the disclosure, the air conditioner 100 may adjust a power saving learning level or may skip a preliminary determination stage, based on the absence schedule. As it is highly likely that a user is absent in a time corresponding to the absence schedule, in order to increase a power consumption decrease effect, the air conditioner 100 may increase a speed at which power consumption is decreased due to power saving control.

Referring to FIG. 19, in operation S1902, the air conditioner 100 obtains absence schedule information. According to an embodiment of the disclosure, the air conditioner 100 may obtain the absence schedule information by receiving a user input of designating the absence schedule information via the input interface 1610 of the air conditioner 100. According to an embodiment of the disclosure, the external device 1710 may receive a user input of designating absence schedule information via an application and may transmit the absence schedule information to the server 1720, and the air conditioner 100 may receive the absence schedule information from the server 1720.

In operation S1906, the air conditioner 100 determines whether a current time corresponds to an absence schedule. When the current time corresponds to the absence schedule, the air conditioner 100 performs operation S1908 or S1910.

According to an embodiment of the disclosure, in operation S1908, the air conditioner 100 selects a power saving learning level higher than a currently-set power saving learning level. According to an embodiment of the disclosure, when a time to perform power saving control corresponds to the absence schedule, the air conditioner 100 may operate at a level being one higher than a level determined based on a performance history of a plurality of intermediate operation stages. For example, when it is set to operate at a first learning level according to a performance history of an intermediate operation stage, the air conditioner 100 may operate at a second learning level that is one higher level. According to an embodiment of the disclosure, when the time to perform the power saving control corresponds to the absence schedule, the air conditioner 100 may operate at a designated high power saving learning level. For example, according to an embodiment of the disclosure, when the time to perform the power saving control corresponds to the absence schedule, the air conditioner 100 may operate at a third learning level, regardless of a performance history of an intermediate operation stage.

According to an embodiment of the disclosure, in operation S1910, the air conditioner 100 may not perform a preliminary determination stage, and may perform power saving control. That is, when the air conditioner 100 is turned on during a time period corresponding to the absence schedule, the air conditioner 100 may operate in a mode of performing power saving control without a preliminary determination stage. Therefore, when the air conditioner 100 is turned on in a time corresponding to the absence schedule, the air conditioner 100 may immediately operate in an absence wind-free stage, and when a person is detected, the air conditioner 100 may stop power saving control and may operate in a normal mode.

According to an embodiment of the disclosure, when a current time corresponds to the absence schedule, the air conditioner 100 may perform only one of operation S1908 and operation S1910. According to an embodiment of the disclosure, when a current time corresponds to the absence schedule, the air conditioner 100 may perform both operation S1908 and operation S1910.

When it is determined that the current time does not correspond to the absence schedule in operation S1906, the air conditioner 100 maintains a current power saving learning level determined according to a performance history of an intermediate operation stage in operation S1912.

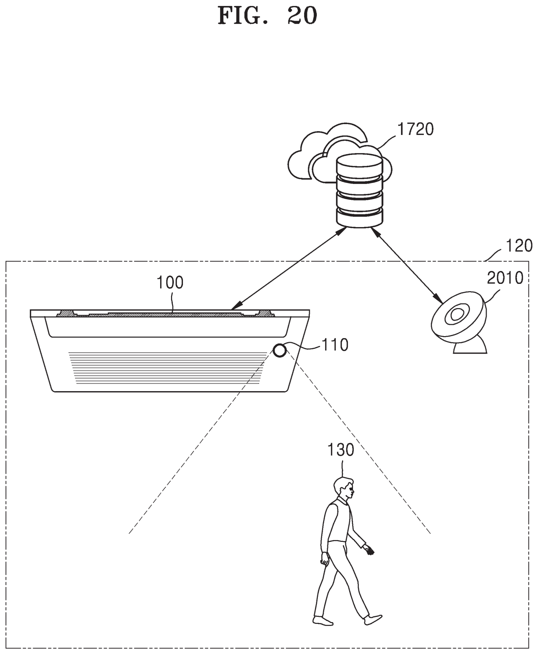

FIG. 20 is a diagram illustrating an example procedure in which an air conditioner detects a person from a target space, according to an embodiment of the disclosure.

According to an embodiment of the disclosure, an external detection sensor 2010 configured to detect a person 130 is arranged in the target space 120, and whether a person is present or absent from the target space 120 may be determined using a sensor detection value of the external detection sensor 2010. The air conditioner 100 may receive the sensor detection value or a person detection result of the external detection sensor 2010, and may perform power saving control using the person detection result of the external detection sensor 2010.

The external detection sensor 2010 may be implemented in the form of a sensor device, or may be included in a preset electronic device. For example, the external detection sensor 2010 may correspond to a motion detect sensor device. Also, for example, the external detection sensor 2010 may be a sensor included in an external device such as an artificial intelligence speaker, a refrigerator, a television, a wall pad, etc.

According to an embodiment of the disclosure, the external detection sensor 2010 may generate and output the sensor detection value. The air conditioner 100 may receive the sensor detection value of the external detection sensor 2010, and may detect a person from a target space using the sensor detection value.

According to an embodiment of the disclosure, the external detection sensor 2010 or an external device including the external detection sensor 2010 may generate and output the person detection result. The air conditioner 100 may receive the person detection result from the external detection sensor 2010 or the external device including the external detection sensor 2010.

According to an embodiment of the disclosure, the external detection sensor 2010 or the external device including the external detection sensor 2010 transmits the sensor detection value or the person detection result to the air conditioner 100 via the server 1720. When the person 130 is detected by the external detection sensor 2010, the air conditioner 100 determines that the person 130 is present in the target space 120. When any one of the detection sensor 110 included in the air conditioner 100 and the external detection sensor 2010 detects the person 130 from the target space 120, the air conditioner 100 determines that the person 130 is present in the target space 120. According to an embodiment of the disclosure, as the air conditioner 100 additionally detects a person using the external detection sensor 2010 arranged in the target space 120, there is an effect of decreasing a blind spot in the target space 120. As the blind spot is decreased in the target space 120, it is possible to prevent and/or reduce a case in which, even when a person is present in the target space 120, the air conditioner 100 performs power saving control, and thus, cannot provide a user-desired air conditioning operation, so that inconvenience occurs to a user.

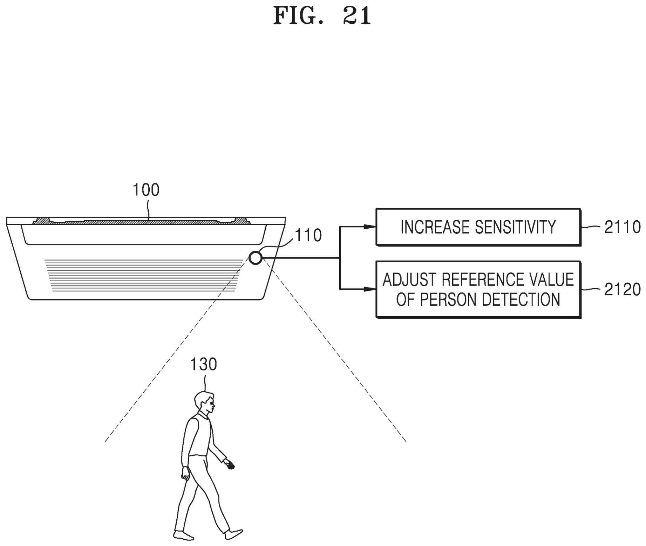

FIG. 21 is a diagram illustrating an example procedure for adjusting sensor sensitivity when a person is detected from a target space, according to an embodiment of the disclosure.

According to an embodiment of the disclosure, when the air conditioner 100 detects a person 130 from the target space 120, the air conditioner 100 may increase sensitivity of an operation of detecting the person 130 using the detection sensor 110. When the air conditioner 100 determines that the person 130 is present in the target space 120, the air conditioner 100 may increase sensitivity of an operation of detecting the person 130 so as to prevent and/or reduce a case in which the air conditioner 100 incorrectly determines that the person 130 is absent even when the person 130 is present.

According to an embodiment of the disclosure, in operation 2110, the air conditioner 100 may increase sensitivity of the detection sensor 110. For example, the air conditioner 100 may increase sensitivity of the detection sensor 110 by increasing signal amplification strength of the detection sensor 110. According to an embodiment of the disclosure, by allowing a sensor detection value to change due to a very small movement of the person 130 by increasing sensitivity of the detection sensor 110, it is possible to prevent or reduce the air conditioner 100 incorrectly determining that the person 130 is absent even when the person 130 is present.

According to an embodiment of the disclosure, in operation 2120, the air conditioner 100 may adjust a reference value of determining that the person 130 is present in a target space, using a sensor detection value. For example, the processor 210 calculates a movement value of a subject, based on a sensor detection value, and detects the person 130 by comparing the movement value of the subject with the reference value. When the processor 210 determines that the person 130 is present in the target space, the processor 210 may decrease the reference value for comparison with the movement value. According to an embodiment of the disclosure, as the air conditioner 100 detects a very small movement by decreasing the reference value of determining that the person 130 is present, it is possible to prevent or reduce the air conditioner 100 incorrectly determining that the person 130 is absent even when the person 130 is present.

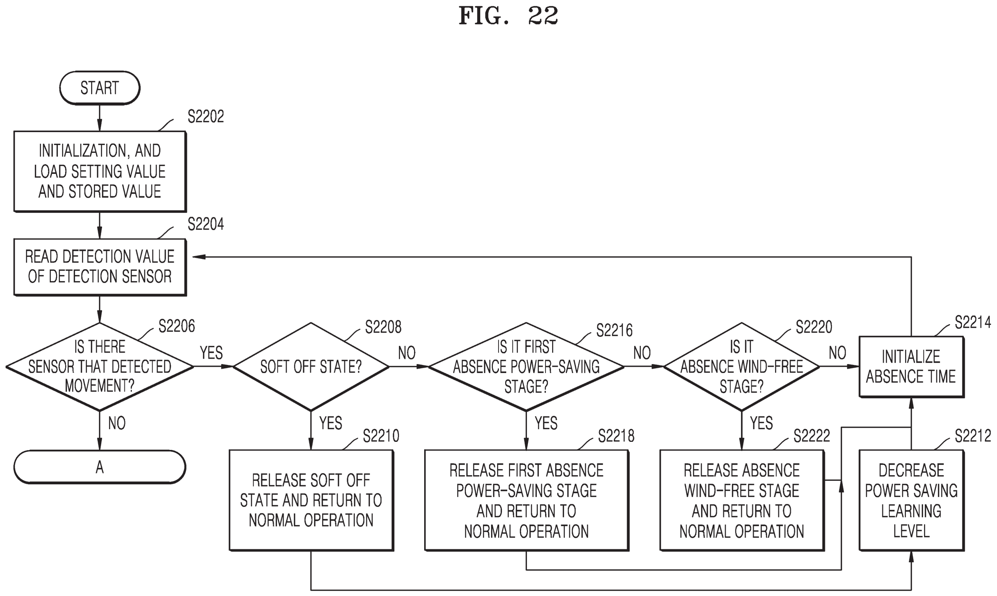

FIG. 22 is a flowchart illustrating an example method of controlling an air conditioner, according to an embodiment of the disclosure. FIG. 22 illustrates detailed operations of the method of controlling an air conditioner, according to an embodiment of the disclosure. FIG. 22 illustrates an example of a case in which an intermediate operation stage includes an absence wind-free stage and a first absence power-saving stage.

In operation S2202, the air conditioner 100 initializes the air conditioner 100, and loads a setting value and a stored value. The air conditioner 100 may initialize an absence time to 0. Also, the air conditioner 100 may load a duration time of a preliminary determination stage, a duration time of an absence wind-free stage, a duration time of a first absence power-saving stage, and a soft off setting time. Also, the air conditioner 100 may load a power saving learning level.

In operation S2204, the air conditioner 100 may read a sensor detection value of the detection sensor 110.

In operation S2206, the air conditioner 100 determines whether a movement has been detected by the detection sensor 110. The air conditioner 100 may determine whether the movement has been detected, based on a change in the sensor detection value of the detection sensor 110. When the air conditioner 100 uses the external detection sensor 2010 as well as the detection sensor 110, the air conditioner 100 determines whether there is a sensor that detected a movement from among the external detection sensor 2010 and the detection sensor 110.

In operation S2206, when there is the sensor that detected the movement, in operation S2208, the air conditioner 100 determines whether the air conditioner 100 is currently in a soft off state. When the air conditioner 100 determines that it is in the soft off state in operation S2208, the air conditioner 100 releases the soft off state and returns to a normal operation in operation S2210. Based on a history in which power saving control is released in the soft off state, the air conditioner 100 decreases a power saving learning level in operation S2212. The air conditioner 100 initializes an absence time to 0 in operation S2214, and proceeds to operation S2204 to continue an operation of reading a sensor detection value from the detection sensor 110.

When the air conditioner 100 determines that it is not in the soft off state in operation S2208, the air conditioner 100 determines whether the air conditioner 100 currently corresponds to a first absence power-saving stage in operation S2216. When the air conditioner 100 determines that the air conditioner 100 corresponds to the first absence power-saving stage in operation S2216, the air conditioner 100 releases the first absence power-saving stage, and returns to a normal operation in operation S2218. The air conditioner 100 initializes an absence time to 0 in operation S2214, and proceeds to operation S2204 to continue an operation of reading a sensor detection value from the detection sensor 110.

When the air conditioner 100 determines that the air conditioner 100 does not correspond to the first absence power-saving stage in operation S2216, the air conditioner 100 determines whether the air conditioner 100 currently corresponds to an absence wind-free stage in operation S2220. When the air conditioner 100 determines that the air conditioner 100 corresponds to the absence wind-free stage in operation S2220, the air conditioner 100 releases the absence wind-free stage, and returns to a normal operation in operation S2222. The air conditioner 100 initializes an absence time to 0 in operation S2214, and proceeds to operation S2204 to continue an operation of reading a sensor detection value from the detection sensor 110.

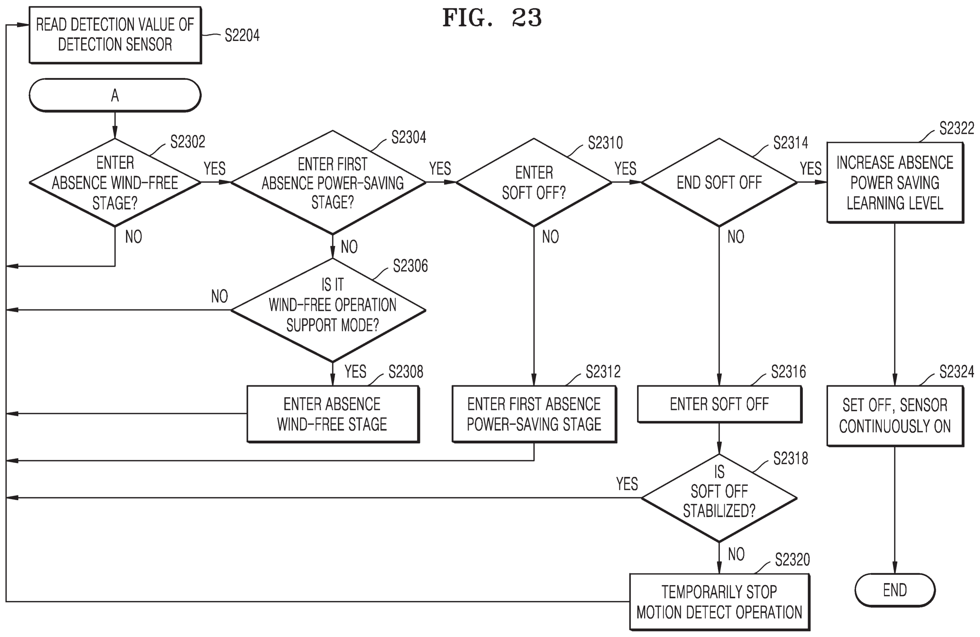

In operation S2206, when there is no sensor that detected a movement, the air conditioner 100 proceeds to operation A. Operations after operation A will now be described in greater detail below with reference to FIG. 23.

FIG. 23 is a flowchart illustrating an example operation of an air conditioner according to an embodiment of the disclosure. With reference to FIG. 23, operations after operation A described with reference to FIG. 22 will now be described in greater detail.

In operation S2206, when there is no sensor that detected a movement, in operation S2302, the air conditioner 100 determines whether to enter an absence wind-free stage. When an absence time is equal to or greater than a duration time of a preliminary determination stage, the air conditioner 100 may determine that a condition of entering the absence wind-free stage is satisfied. When the absence time does not satisfy the condition of entering the absence wind-free stage in operation S2302, the air conditioner 100 proceeds to operation S2204, and reads a sensor detection value of the detection sensor 110.

When it is determined to enter the absence wind-free stage in operation S2302, the air conditioner 100 determines whether to enter a first absence power-saving stage in operation S2304. When the absence time is equal to or greater than a first absence power-saving entering reference time, the air conditioner 100 may determine that a condition of entering the first absence power-saving stage is satisfied. The first absence power-saving entering reference time may correspond to a sum of the duration time of the preliminary determination stage and a duration time of the absence wind-free stage.

When it is determined not to enter the first absence power-saving stage in operation S2304, the air conditioner 100 determines whether the air conditioner 100 is in a wind-free operation support mode in operation S2306. For example, the wind-free operation support mode corresponds to a case in which there is a wind-free panel and a mode is not for heating. When it is determined that the air conditioner 100 is in the wind-free operation support mode in operation S2306, the air conditioner 100 enters the absence wind-free stage and performs an operation of the absence wind-free stage in operation S2308. After entering the absence wind-free stage in operation S2308, the air conditioner 100 proceeds to operation S2204, and reads a sensor detection value of the detection sensor 110.

When the condition of entering the first absence power-saving stage is satisfied in operation S2304, the air conditioner 100 determines whether the absence time satisfies a condition of entering a soft off state in operation S2310. When the absence time is equal to or greater than a soft off entering reference time, the air conditioner 100 may determine that the condition of entering the soft off stage is satisfied. The soft off entering reference time may correspond to a sum of the duration time of the preliminary determination stage, the duration time of the absence wind-free stage, and a duration time of the first absence power-saving stage.

When it is determined that the condition of entering the soft off stage is not satisfied in operation S2310, the air conditioner 100 enters the first absence power-saving stage in operation S2312, and performs an operation of the first absence power-saving stage. After entering the first absence power-saving stage in operation S2312, the air conditioner 100 proceeds to operation S2204, and reads a sensor detection value of the detection sensor 110.

When it is determined that the condition of entering the soft off stage is satisfied in operation S2310, the air conditioner 100 determines whether a soft off end condition is satisfied in operation S2314. When a duration is equal to or greater than a soft off end reference time, the air conditioner 100 may determine that a condition of ending the soft off stage is satisfied. The soft off end reference time may correspond to a sum of the duration time of the preliminary determination stage, the duration time of the absence wind-free stage, the duration time of the first absence power-saving stage, and a duration time of the soft off stage.

When it is determined that the soft off end condition is not satisfied in operation S2314, the air conditioner 100 enters the soft off stage in operation S2316, and performs an operation of the soft off stage. In operation S2316, the air conditioner 100 enters the soft off stage and maintains a soft off state. After entering the soft off stage in operation S2316, the air conditioner 100 may determine whether a current stage corresponds to a soft off stabilization stage in operation S2318. The soft off stabilization stage is a stage after a preset time is passed after a soft off operation has been completed. The soft off stabilization stage is a stage in which a vibration of the air conditioner 100 is ended, the vibration occurring due to the soft off operation.

When the air conditioner 100 determines that the current stage does not correspond to the soft off stabilization stage in operation S2318, the air conditioner 100 temporarily stops a motion detect operation using the detection sensor 110 in operation S2320. After temporarily stopping the motion detect operation in operation S2320, the air conditioner 100 proceeds to operation S2204, and reads a sensor detection value of the detection sensor 110.

When the air conditioner 100 determines that it corresponds to the soft off stabilization stage in operation S2318, the air conditioner 100 proceeds to operation S2204, and reads a sensor detection value of the detection sensor 110.

When it is determined that the soft off stage is ended in operation S2314, the air conditioner 100 increases an absence power saving learning level in operation S2322. When the absence time reaches the duration time of the soft off stage, the air conditioner 100 may determine that it is highly likely that a person is absent, and thus, may increase the absence power saving learning level so as to further intensively perform power saving control.

In operation S2324, the air conditioner 100 is turned off, and the detection sensor 110 remains in an activated state.

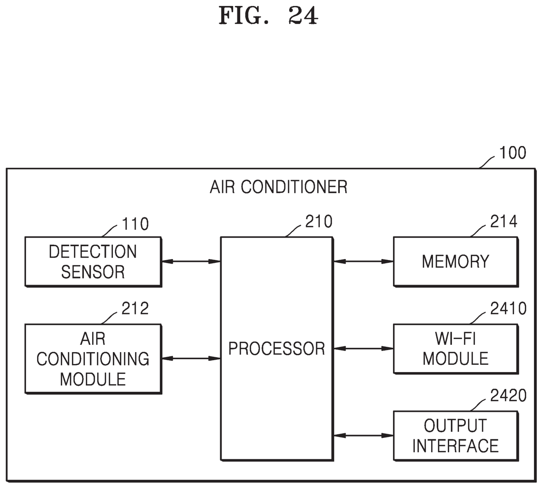

FIG. 24 is a block diagram illustrating an example configuration of an air conditioner, according to an embodiment of the disclosure.

In order to prevent and/or reduce redundancy of descriptions in FIG. 24, descriptions that are redundant to the air conditioner 100 which are provided in FIG. 2 may not be repeated here, and a difference therebetween will be mainly described.

The air conditioner 100 according to an embodiment of the disclosure may include the detection sensor 110, the processor 210, the air conditioning module 212, the memory 214, a Wi-Fi module (e.g., including Wi-Fi circuitry) 2410, and an output interface (e.g., including output circuitry) 2420.

The Wi-Fi module 2410 may include various Wi-Fi circuitry and performs a Wi-Fi wireless communication with an external device. The Wi-Fi module 2410 may access a wireless short-range communication network (WLAN), based on the IEEE 802.11 standard. The Wi-Fi module 2410 may communicate with an AP using the Wi-Fi wireless communication. The Wi-Fi module 2410 may communicate with the server 1720, the external device 1710, etc., by accessing the AP. The AP may be arranged in an indoor space in which an indoor unit of the air conditioner 100 is arranged. For example, the air conditioner 100 may be arranged in a living room in home.

The Wi-Fi module 2410 may transmit a Wi-Fi signal to the AP, or may receive a Wi-Fi signal from the AP. According to an embodiment of the disclosure, the processor 210 may detect a person from a target space using a channel state information (CSI) value of the Wi-Fi signal received by the Wi-Fi module 2410.

According to an embodiment of the disclosure, the air conditioner 100 may detect a person from a target space using a sensor detection value of the detection sensor 110, or may detect a person from the target space using the CSI value of the Wi-Fi signal. According to an embodiment of the disclosure, when the air conditioner 100 detects a person from one of detection values obtained using both the detection sensor 110 and the Wi-Fi module 2410, the air conditioner 100 may determine that a person is present in the target space.

According to an embodiment of the disclosure, the air conditioner 100 may not include the detection sensor 110, and may include the processor 210, the air conditioning module 212, the memory 214, the Wi-Fi module 2410, and the output interface 2420. The air conditioner 100 may determine whether a person is present in the target space, based on the CSI value of the Wi-Fi signal received by the Wi-Fi module 2410.

The output interface 2420 may include various output circuitry and outputs various information or data. The output interface 2420 may be included in the indoor unit of the air conditioner 100. The output interface 2420 may include, for example, a display, a speaker, a lamp, or the like.

According to an embodiment of the disclosure, the processor 210 may determine whether a Wi-Fi signal received by the Wi-Fi module 2410 from the AP does not use a Wi-Fi network in a first frequency band, or whether a quality of the Wi-Fi signal does not satisfy a preset reference. When the Wi-Fi signal received by the Wi-Fi module 2410 from the AP does not use the Wi-Fi network in the first frequency band, or the quality of the Wi-Fi signal does not satisfy the preset reference, the processor 210 may generate a first message indicating that motion detect using the Wi-Fi signal cannot be performed.

According to an embodiment of the disclosure, the processor 210 transmits the first message to the server 1720 via the Wi-Fi module 2410. The server 1720 may transmit the received first message to the external device 1710 corresponding to an account to which the air conditioner 100 is registered, and may control the external device 1710 to output the first message. For example, the external device 1710 may output the first message via an application that controls the air conditioner 100.

According to an embodiment of the disclosure, the processor 210 may output the first message via the output interface 2420. The output interface 2420 may display the first message, or may output the first message as an audio message via the speaker.

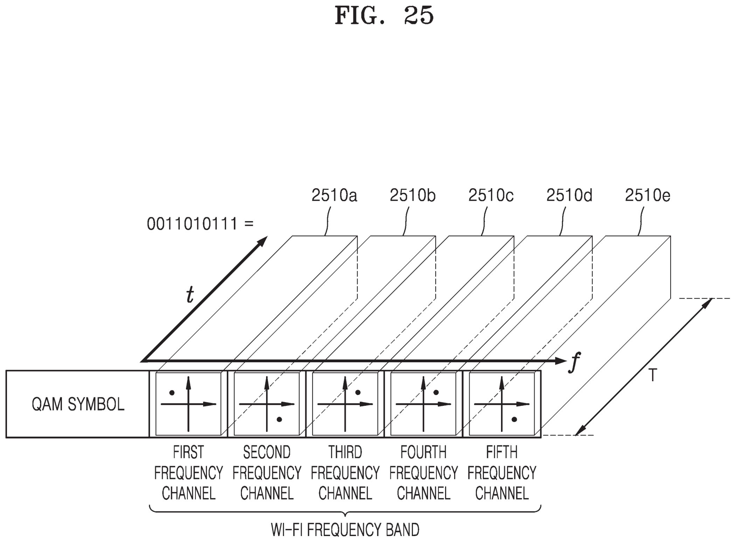

FIG. 25 is a diagram illustrating an example Wi-Fi frequency channel according to an embodiment of the disclosure.

A Wi-Fi signal may be transmitted using a frequency channel in a predetermined frequency band. The predetermined frequency band may be selected in a Wi-Fi frequency band corresponding to a Wi-Fi communication. The Wi-Fi frequency band may correspond to a 2.4 gigahertz (GHz) band and a 5 GHz which are designated as an Industrial Scientific and Medical (ISM) band.

According to an embodiment of the disclosure, the Wi-Fi module 2410 may communicate with an AP using a plurality of frequency channels 2510a, 2510b, 2510c, 2510d, and 2510e. The plurality of frequency channels 2510a, 2510b, 2510c, 2510d, and 2510e may include the first frequency channel 2510a, the second frequency channel 2510b, the third frequency channel 2510c, the fourth frequency channel 2510d, and the fifth frequency channel 2510e. The plurality of frequency channels 2510a, 2510b, 2510c, 2510d, and 2510e with gaps not having interference may be set within a frequency band. According to an embodiment of the disclosure, the plurality of frequency channels 2510a, 2510b, 2510c, 2510d, and 2510e may transmit information using a quadrature amplitude modulation (QAM) scheme. The QAM refers to a scheme by which two orthogonal carriers are modulated with respect to amplitude shaft keying (ASK) and are synthesized, and a result of the synthesis is transmitted on the same transmission path, such that a bit rate may be doubly increased. The QAM method is a modulation method that is synthesized by digitally applying amplitude modulation to an I (In-phase) carrier and a Q (Quadri-phase) carrier whose carrier frequencies are the same but whose phases are orthogonal to each other.

According to an embodiment of the disclosure, 2-bit information may be transmitted via each of the frequency channels 2510a, 2510b, 2510c, 2510d, and 2510e. Also, a packet transmission period T of each of the frequency channels 2510a, 2510b, 2510c, 2510d, and 2510e may be set to be a time in which one QAM symbol can be sufficiently interpreted. Each of the frequency channels 2510a, 2510b, 2510c, 2510d, and 2510e may transmit 2-bit data by modulating an I-carrier and a Q-carrier.

In FIG. 25, a horizontal axis of the graph representing a QAM symbol indicates a value of the I-carrier, and a vertical axis indicates a value of the Q-carrier. In the example of FIG. 25, each of the frequency channels 2510a, 2510b, 2510c, 2510d, and 2510e may transmit 2-bit data by a combination of the value of the I-carrier and the value of the Q-carrier. The first frequency channel 2510a transmits a QAM symbol corresponding to "00". The second frequency channel 2510b transmits a QAM symbol corresponding to "11". The third frequency channel 2510c transmits a QAM symbol corresponding to "01". The fourth frequency channel 2510d transmits a QAM symbol corresponding to "01". The fifth frequency channel 2510e transmits a QAM symbol corresponding to "11". In this manner, the Wi-Fi module 2410 may transmit preset data as a combination of a predetermined I-carrier and a predetermined Q carrier.

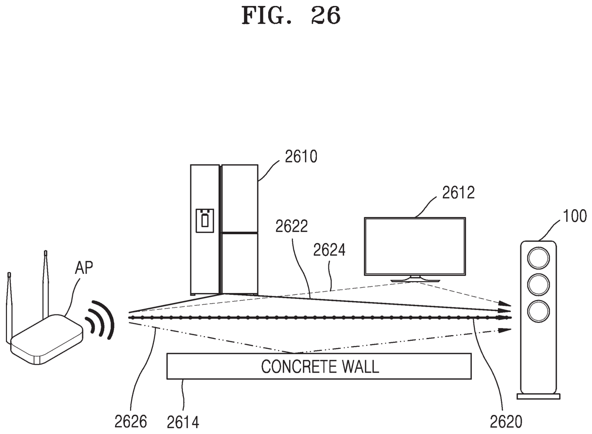

FIG. 26 is a diagram illustrating an example in which a Wi-Fi signal is transmitted via a Wi-Fi channel, according to an embodiment of the disclosure.

The Wi-Fi signal transmitted via the frequency channel described above. According to an embodiment of the disclosure, the Wi-Fi signal may be transmitted from the air conditioner 100 to the AP. The Wi-Fi signal may be transmitted in a various radio wave environments. Due to an obstacle such as an object, a wall, etc. in a space via which the Wi-Fi signal is transmitted, a characteristic of the Wi-Fi signal may be changed. The Wi-Fi signal is radially transmitted, and shows an overlapping and distorted signal while passing through a wall, an object, etc. For example, when a Wi-Fi signal is transmitted on a first path 2620, the Wi-Fi signal is transmitted from an AP to the air conditioner 100 in a straight line without interference due to an obstacle. For example, when the Wi-Fi signal is transmitted on a second path 2622, the Wi-Fi signal experiences interference due to a refrigerator 2610, and thus, is distorted. For example, when the Wi-Fi signal is transmitted on a third path 2624, the Wi-Fi signal experiences interference due to a TV 2612, and thus, is distorted. The Wi-Fi signal may experience interference due to a concrete wall 2614 when it is transmitted along path 2626, and thus, may be distorted.

Such a radio wave transmission environment is referred to as a channel. State information of each frequency channel may be defined as CSI. The CSI may be included as physical layer information in a Wi-Fi signal. A CSI value indicates information such as scattering, attenuation diffraction, etc. due to a distance between a pair of transmission and reception antennas via various subcarriers of a channel. The CSI value may indicate whether there is a moving subject in a space in which a Wi-Fi signal is transmitted. According to an embodiment of the disclosure, the processor 210 may determine whether a person is present in a target space, using a CSI value of a Wi-Fi signal received by the Wi-Fi module 2410.

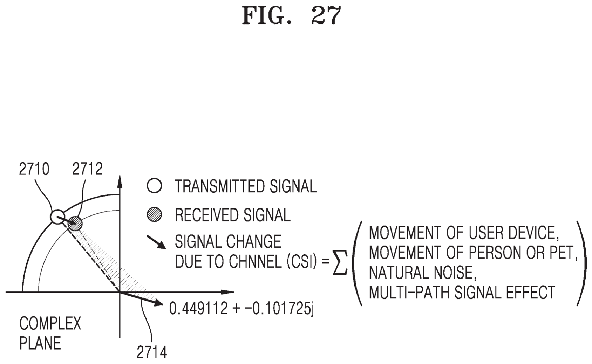

FIG. 27 is a diagram illustrating an example CSI value according to an embodiment of the disclosure.

The Wi-Fi module 2410 may obtain CSI via an orthogonal frequency division multiplexing (OFDM) subcarrier. The Wi-Fi module 2410 may extract the CSI from a physical layer of a Wi-Fi signal. As the CSI includes amplitude and phase information with respect to a plurality of subcarriers, the Wi-Fi module 2410 may obtain a state of the Wi-Fi signal using the CSI. The CSI indicates a characteristic of the Wi-Fi signal which is caused by an arrangement of an obstacle, a wall, etc. of a corresponding space.

The CSI indicates a change in signals which are transmitted and received by the Wi-Fi module 2410. As a signal change is shown by a channel, the CSI indicates a state of the corresponding space. The CSI is determined by a combination of a movement of a user device, a movement of a subject on a signal path, natural noise, a multi-path signal effect, etc. For example, when a user device such as a robot cleaner moves on a path of a Wi-Fi signal, a CSI value may be changed. When there is a movement of a person or a pet on the path of the Wi-Fi signal, the CSI value may be changed. When there is interference due to a moving subject such as the user device, a person, or a pet, distortion may occur in the Wi-Fi signal due to a Doppler effect. Also, the CSI value may be changed due to natural noise. As the Wi-Fi signal is transmitted on multiple paths, the CSI value may be changed. The CSI value may indicate a sum of various factors.

CSI may indicate a change between signals that are transmitted and received on a complex plane. The CSI may be obtained in a manner that a predefined signal is transmitted from a transmission end and a reception end measures how far a point is deviated from its predicted position. According to an embodiment of the disclosure, the transmission end may correspond to an AP, and the reception end may correspond to the Wi-Fi module 2410 of the air conditioner 100. When interpreting the difference between the transmitted signal and the received signal, via a polar coordinate system on the complex plane, a change in an angle indicates a degree of phase shift, and a change in a radius corresponds to a degree of amplification attenuation. By doing so, the degree of phase shift and the degree of amplification attenuation may be digitized on the polar coordinate system. For example, as illustrated in FIG. 27, it is assumed that a signal transmitted on the complex plane corresponds to first coordinates 2710 and a signal received on the complex plane corresponds to second coordinates 2712. In this case, CSI may indicate a vector 2714 indicating a difference between the transmitted signal and the received signal, or may indicate polar coordinates 0.449112+ -0.101725j.

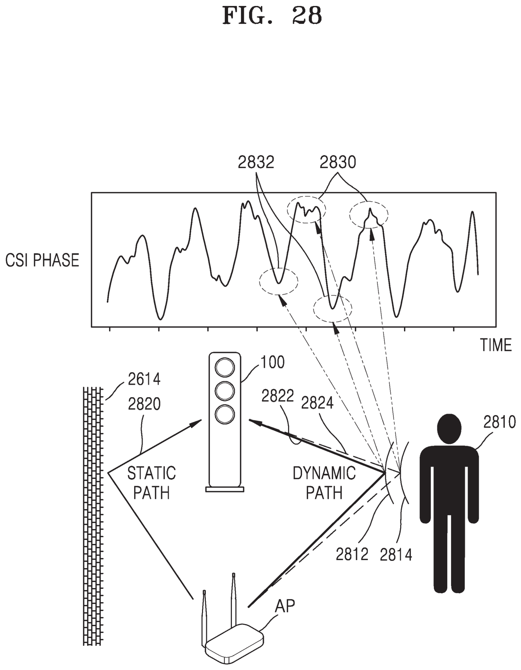

FIG. 28 is a diagram illustrating an example CSI value according to an embodiment of the disclosure.

The CSI value may vary according to positions of an AP and the air conditioner 100 in a target space. When a person moves in the target space, CSI may vary. For example, as illustrated in FIG. 28, it is assumed that there are a concrete wall 2614 and a person 2810 in a space in which the AP and the air conditioner 100 are arranged. As the concrete wall 2614 is a fixed obstacle, a Wi-Fi signal transmitted on a fifth path 2820 has a constant signal characteristic. On the other hand, when there is interference due to the person 2810 who is a moving subject, the Wi-Fi signal is transmitted on a sixth path 2822 or a seventh path 2824, so that a characteristic of the Wi-Fi signal varies over time. For example, when an outline of the person 2810 is at 2812 position, the Wi-Fi signal is transmitted on the sixth path 2822, and a CSI phase is shown as 2832. When the outline of the person 2810 is at 2814 position, the Wi-Fi signal is transmitted on the seventh path 2824, and a CSI phase is shown as 2830. In this manner, as the CSI value is changed according to a movement of the person 2810, it is possible to detect a person using a CSI value.

According to an embodiment of the disclosure, it is possible to detect a person from a target space using CSI of a Wi-Fi signal received by the Wi-Fi module 2410. The processor 210 may obtain a CSI value of the Wi-Fi signal received by the Wi-Fi module 2410, and may detect a person from the target space using the CSI value. The processor 210 may set a preset CSI reference value, and when the CSI value is equal to or greater than the CSI reference value, the processor 210 may determine that a person is present in the target space. When the CSI value is less than the CSI reference value, the processor 210 may determine that a person is not present in the target space. However, even when it is determined that a person is not present in the target space, based on the CSI value, if a person is detected by the detection sensor 110, the processor 210 may determine that a person is present in the target space.

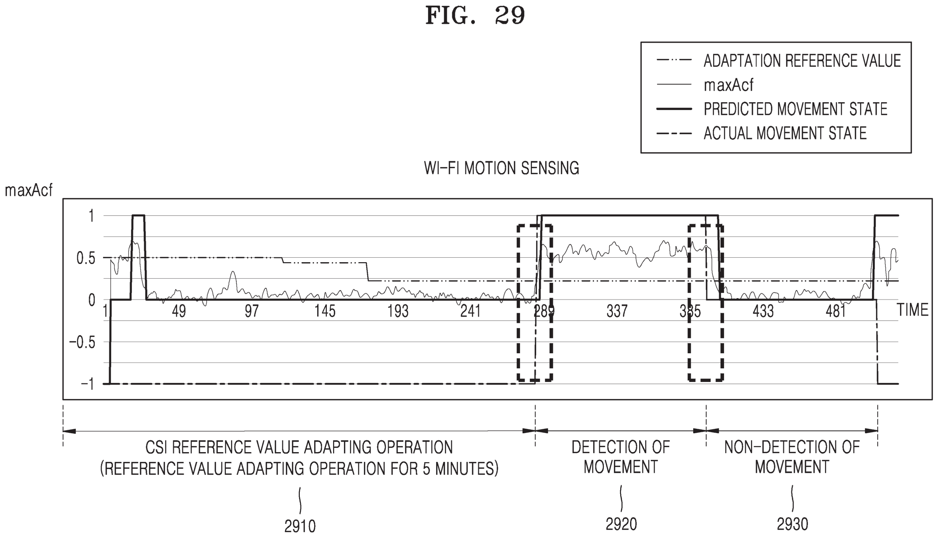

FIG. 29 is a graph illustrating an example result of detecting a motion, based on a CSI value, according to an embodiment of the disclosure.

The graph of FIG. 29 illustrates an adaptation reference value over time, a max autocorrelation function (maxAcf) value, a predicted movement state, and an actual movement state in a procedure in which the air conditioner 100 detects a person using a Wi-Fi signal. The adaptation reference value is a CSI reference value that is adaptively changed. The maxAcf value is a value that corresponds to a CSI value. The predicted movement state is a movement detection result determined based on the CSI value. The movement detection result corresponds to a person detection result. The actual movement state is related to an actual movement state of a test performer in the test procedure, and thus, is known information in the test procedure.

According to an embodiment of the disclosure, the processor 210 may detect a motion of a person, using the CSI value and the adaptation reference value. The adaptation reference value is the CSI reference value that is determined via a reference value adapting operation. The adaptation reference value may be changed from a default value of 0.35 (maximum value) to a lowest value of 0.18. According to an embodiment of the disclosure, the processor 210 may set the adaptation reference value, based on statistical information collected by the detection sensor 110. According to an embodiment of the disclosure, the processor 210 may adaptively determine the CSI reference value, based on a person detection result by the detection sensor 110. For example, the processor 210 may determine the adaptation reference value by statistically collecting a CSI value range in which a person is detected and a CSI value range in which a person is not detected. The processor 210 may perform a CSI reference value adapting operation, during a preset time period, using the person detection result by the detection sensor 110.

According to an embodiment of the disclosure, the processor 210 may perform a CSI reference value adapting operation 2910 during a preset time period after the air conditioner 100 is turned on. The processor 210 may perform the CSI reference value adapting operation 2910 until a person is detected by the detection sensor 110. As a person not-detected state is continued, the processor 210 may decrease the adaptation reference value. The adaptation reference value may be decreased starting from the maximum value of 0.35 to the lowest value of 0.18. The processor 210 may set the adaptation reference value, based on a CSI reference value when a person is detected. In the example of FIG. 29, the adaptation reference value is set to 0.28.

When the CSI reference value adapting operation 2910 is completed, the processor 210 detects a person from a target space using a CSI value and the adaptation reference value. For example, the processor 210 may detect a movement using the CSI value in 2920 period, and may determine that a person is present as the movement is detected. The processor 210 determines that a person is present when the CSI value is equal to or greater than the adaptation reference value. As the CSI value is increased due to a subject with a movement, the processor 210 detects a movement of a person using the CSI value, and when the movement is detected, the processor 210 may determine that a person is present.

According to an embodiment of the disclosure, the processor 210 may determine whether a CSI value is equal to or greater than the adaptation reference value at preset time intervals. For example, the processor 210 may determine whether a CSI value is equal to or greater than the adaptation reference value at every one second. According to an embodiment of the disclosure, when the processor 210 determines that a CSI value is equal to or greater than the adaptation reference value continuously by a first movement reference count, the processor 210 may determine that a person is detected. For example, when the processor 210 determines that the CSI value is equal to or greater than the adaptation reference value by four sequential times, the processor 210 may determine that a person is present.

When the CSI value is less than the adaptation reference value, the processor 210 determines that a person is not present. For example, as a CSI value is less than the adaptation reference value in 2930 period, the processor 210 may determine that a movement is not detected, and a person is not present.

According to an embodiment of the disclosure, when the processor 210 determines that a CSI value is less than the adaptation reference value continuously by a second movement reference count in a movement-detected state, the processor 210 may determine that a movement is not detected. For example, when the processor 210 determines that the CSI value is less than the adaptation reference value by 20 sequential times, the processor 210 may determine that a movement is not detected, and a person is absent.

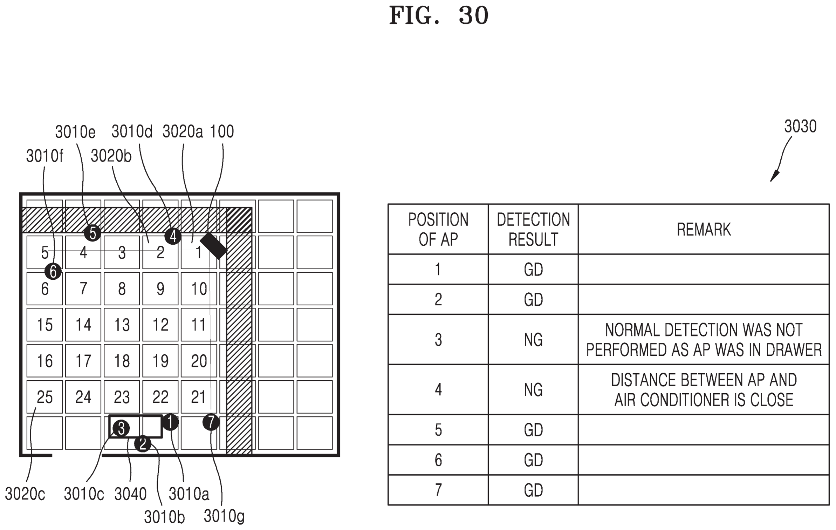

FIG. 30 is a diagram illustrating an example movement detection result according to a position of an AP, according to an embodiment of the disclosure.

According to an embodiment of the disclosure, according to a position of the AP, reliability of person detection may vary. FIG. 30 shows the test results of detecting a movement of a person using a CSI value, in a target space including a 1^{st} area 3020a to a 25^{th} area 3020c. A test performer in the test moved for 10 to 20 seconds and waited without movement for 50 seconds in the 2^{nd} area 3020b to the 25^{th} area 3020c, except for the 1^{st} area 3020a. While changing a position of the AP to a first position 3010a, a second position 3010b, a third position 3010c, a fourth position 3010d, a fifth position 3010e, a sixth position 3010f, and a seventh position 3010g, the test performer repeated moving for 10 to 20 seconds and waiting without movement for 50 seconds in the 2^{nd} area 3020b to the 25^{th} area 3020c. It was assumed that the AP was connected by wire and was not positioned in the center of a test room.

Table 3030 shows test results. In Table 3030, GD may refer, for example, to a movement of a person being appropriately detected, and NG may refer, for example, to a movement of a person not being appropriately detected. Even when the test performer moved, if person movement detection using a CSI value has failed, a detection result thereof is shown as NG.

As a result of the test, as a distance between the AP and the air conditioner 100 was close at the fourth position 3010d, movement of a person was not appropriately detected by a CSI value, and thus, a detection result thereof is shown as NG. At the fourth position 3010d, a received signal strength indicator (RSSI) value was detected as -34. That is, reception strength of a Wi-Fi signal was detected at a very low level, and thus, movement of a person was not normally detected.

The third position 3010c corresponds to a position in a dresser 3040. As a result of the test, as the AP was in the dresser at the third position 3010c, movement of a person was not appropriately detected by a CSI value, and thus, a detection result thereof is shown as NG.

When the AP was arranged at the first position 3010a, the second position 3010b, the fifth position 3010e, the sixth position 3010f, and the seventh position 3010g other than the third position 3010c and the fourth position 3010d, a movement of a person was normally detected based on the CSI value.

As a result of the test, except for a case in which a distance between the AP and the air conditioner 100 is excessively close or a case in which the AP was at a position such as inside a drawer to which a Wi-Fi signal was delivered with low strength, it was checked that a movement of a person was normally detected based on a CSI value.

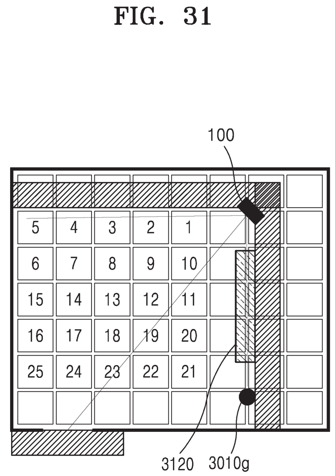

FIG. 31 is a diagram illustrating an example movement detection result according to a position of an AP, according to an embodiment of the disclosure.

Referring to FIG. 31, the air conditioner 100 was arranged closer to the wall by 1 meter, compared to the arrangement in FIG. 30, and the AP was arranged to be further close to the wall from the seventh position 3010g. A test performer performed a test by moving in a 1^{st} area through a 25^{th} area or by minimizing/reducing his/her movement by lying on a sofa 3120.

As a result of the test, a movement of a person was normally detected from the 1^{st} area through the 25^{th} area.

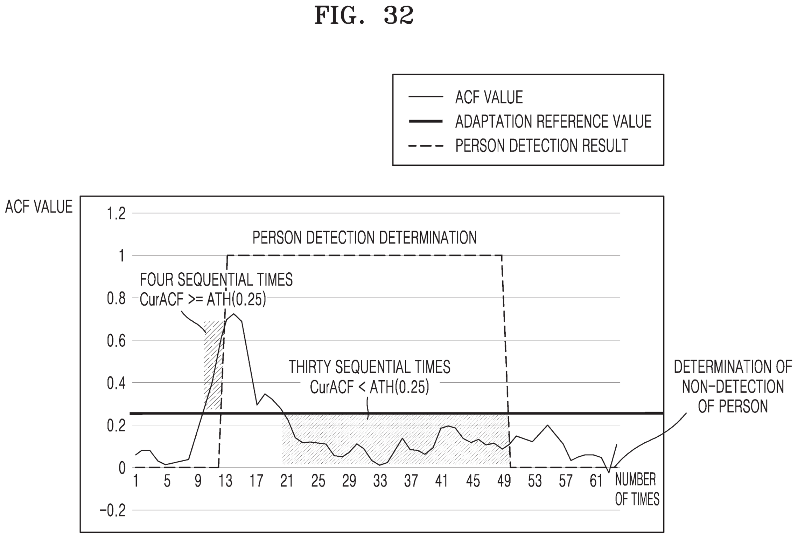

FIG. 32 is a graph illustrating an example test result according to an embodiment of the disclosure.

FIG. 32 shows a result graph of a test performed using a CSI value and an adaptation reference value, according to an embodiment of the disclosure. A horizontal axis of FIG. 32 indicates the number of times of CSI value detection, and a vertical axis indicates an autocorrelation function (ACF) value. The ACF value is a value that corresponds to a CSI value.

As a result of the test, in a case where an adaptation reference value was set to 0.25 and it was determined that a person was not detected, when the ACF value was equal to or greater than the adaptation reference value by four sequential times, the processor 210 determined that a person was detected. Also, in a case where it was determined that a person was detected, when the ACF value was less than the adaptation reference value by thirty sequential times, the processor 210 determined that a person was not detected. All the detection results were determined as normal detections.

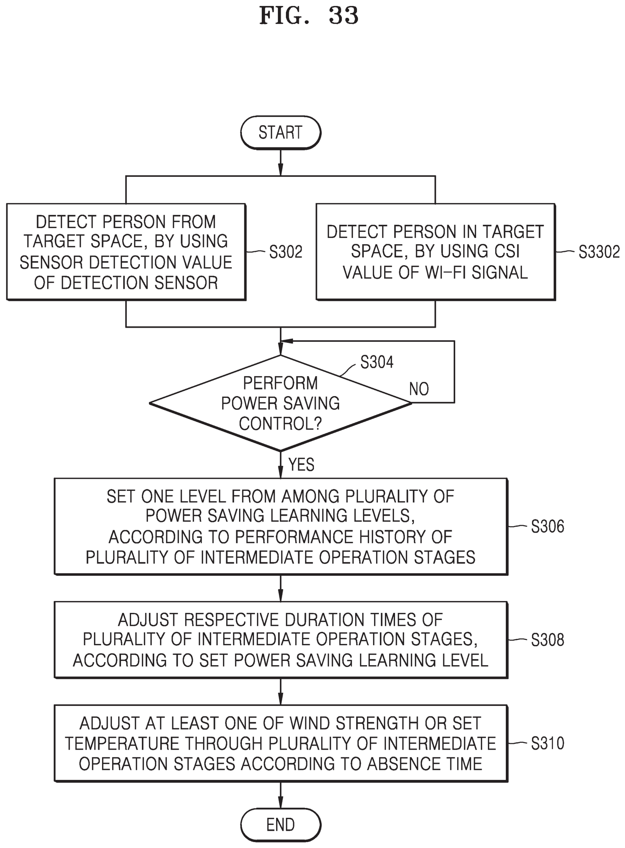

FIG. 33 is a flowchart illustrating an example method of controlling an air conditioner, according to an embodiment of the disclosure.

The method of controlling an air conditioner according to an embodiment of the disclosure may be performed by the air conditioner 100 according to an embodiment of the disclosure.

In operation S302, the air conditioner 100 detects a person from a target space, using a sensor detection value of the detection sensor 110. The air conditioner 100 determines, using the sensor detection value, whether there is a moving subject, and when there is the moving subject, the air conditioner 100 determines that a person is present in the target space. The moving subject may include a pet. The air conditioner 100 includes an operation of detecting a person, using the sensor detection value, or based on the sensor detection value, in operation S302.

In operation S3302, the air conditioner 100 detects a person in the target space, using a CSI value of a Wi-Fi signal. As described above, when the CSI value of the Wi-Fi signal is equal to or greater than a CSI reference value, the air conditioner 100 may determine that a person is present. As described above, the air conditioner 100 may adaptively determine a CSI reference value and generate an adaptation reference value, and then may detect a person from the target space using the CSI reference value and the adaptation reference value.

When the air conditioner 100 determines that a person is detected in at least one of operation S302 or operation S3302, the air conditioner 100 may determine that a person is detected. When the air conditioner 100 determines that a person is not detected in both operation S302 and operation S3302, the air conditioner 100 may determine that a person is not detected.

According to an embodiment of the disclosure, the air conditioner 100 may not perform operation S302, and may perform operation S3302, thereby detecting a person from the target space. In this case, based on a person detection result in operation S3302, the air conditioner 100 may determine whether a person is present or absent.

In operation S304, the air conditioner 100 determines whether to perform power saving control, based on an absence time in which a person is absent in the target space. The air conditioner 100 may perform a preliminary determination stage, and when the absence time reaches a duration time of the preliminary determination stage, the air conditioner 100 may perform power saving control. When the absence time is stopped before it reaches the duration time of the preliminary determination stage, the air conditioner 100 may not perform power saving control. That is, when the absence time is longer than a reference time of determining power saving control, the air conditioner 100 may perform power saving control, and when the absence time is shorter than the reference time of determining power saving control, the air conditioner 100 may not perform power saving control.

When it is determined to perform power saving control, in operation S306, the air conditioner 100 may set one level from among a plurality of power saving learning levels, according to a performance history of a plurality of intermediate operation stages. According to an embodiment of the disclosure, when the air conditioner 100 reaches a soft off state, due to power saving control, and remains in the soft off state for a duration time, the air conditioner 100 may increase a power saving learning level. According to an embodiment of the disclosure, when a person is detected before the duration time is reached in the soft off state, and thus, the air conditioner 100 wakes up, the processor 210 may increase the power saving learning level.

In operation S308, the air conditioner 100 adjusts respective duration times of the plurality of intermediate operation stages, according to a set power saving learning level. The duration time of each of the plurality of intermediate operation stages indicates a time in which an operation of each intermediate operation stage is maintained according to a setting value corresponding to each intermediate operation stage. An operation of adjusting respective duration times of the plurality of intermediate operation stages may be represented as an operation of changing a duration time, an operation of increasing a duration time, an operation of decreasing a duration time, an operation of setting a duration time, or an operation of designating a duration time. The respective duration times of the plurality of intermediate operation stages may be differently set according to a power saving learning level.

In operation S310, the air conditioner 100 adjusts at least one of wind strength or a set temperature through the plurality of intermediate operation stages according to the absence time. The air conditioner 100 may sequentially perform the plurality of intermediate operation stages. The air conditioner 100 adjusts wind strength or a set temperature in each of the intermediate operation stages. The air conditioner 100 may perform an intermediate operation stage during a duration time of each intermediate operation stage, and when the duration time of the intermediate operation stage is ended, the air conditioner 100 performs a next intermediate operation stage. When an intermediate operation stage is switched, the air conditioner 100 adjusts wind strength or a set temperature. During a duration time of an intermediate operation stage, the air conditioner 100 performs an air conditioning operation by maintaining the adjusted wind strength or set temperature.

When a person is detected while power saving control is performed, the air conditioner 100 stops an intermediate operation stage, and ends the power saving control. When the power saving control is ended as a person is detected, the air conditioner 100 may operate with wind strength and a set temperature which were set before the power saving control.

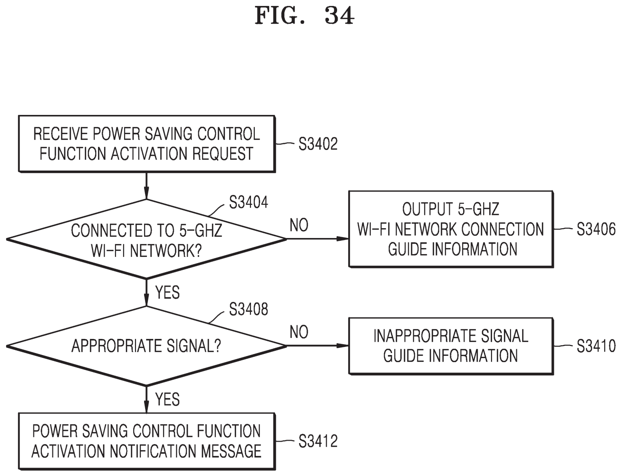

FIG. 34 is a flowchart illustrating an example procedure for activating an absence power saving function and outputting guide information, according to an embodiment of the disclosure.

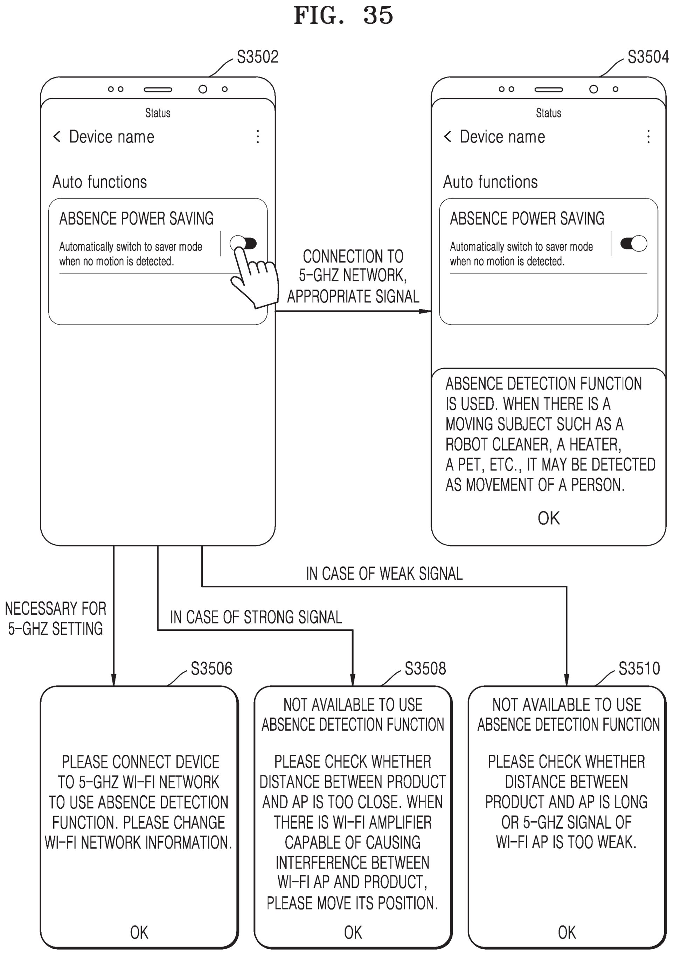

FIG. 35 is a diagram illustrating an example procedure for outputting guide information, according to an embodiment of the disclosure.

With reference to FIGS. 34 and 35, the procedure for activating an absence power saving function and outputting guide information will now be described.

According to an embodiment of the disclosure, the air conditioner 100 may turn on/off a power saving control function via the external device 1710 or the output interface 2420, and may output a related message. The power saving control function may be implemented as one of a power saving control function of using a sensor detection value of the detection sensor 110 and a CSI value of the Wi-Fi module 2410, or a power saving control function of solely using a CSI value of the Wi-Fi module 2410.

In operation S3402, the air conditioner 100 receives a power saving control function activation request. The power saving control function activation request may be received from the external device 1710 or may be received via the input interface 1610 of the air conditioner 100. The power saving control function activation request may correspond to a user input via the external device 1710 or the input interface 1610.

According to an embodiment of the disclosure, the power saving control function activation request may be received via an application of the external device 1710. For example, the power saving control function activation request may be received via a GUI as S3502 of FIG. 35. A user may select activation of absence power saving from a menu such as S3502, and thus, may input the power saving control function activation request.

When the power saving control function activation request is received, in operation S3404, the air conditioner 100 determines whether the Wi-Fi module 2410 uses a Wi-Fi network in a first frequency band. The first frequency band may correspond to a 5-GHz band. Person detection using a CSI value may appropriately operate only with a Wi-Fi signal of the 5-GHz band. Therefore, when the Wi-Fi module 2410 performs Wi-Fi communication via a Wi-Fi channel of a 2.4-GHz band, person detection using a CSI value of a Wi-Fi signal may not be implemented with an appropriate function. Therefore, when the Wi-Fi module 2410 performs communication via the Wi-Fi channel of the 2.4-GHz band, the Wi-Fi module 2410 has to re-access a Wi-Fi network of the 5-GHz band so as to perform person detection using a CSI value of a Wi-Fi signal.

In operation S3404, when it is determined that the Wi-Fi module 2410 is not connected to the Wi-Fi network of the 5-GHz band, the air conditioner 100 outputs connection guide information requesting connection to the Wi-Fi network of the 5-GHz band, in operation S3406. The air conditioner 100 may output the connection guide information via the external device 1710 or the output interface 2420.

According to an embodiment of the disclosure, the connection guide information may be output via an application of the external device 1710. For example, as S3506 of FIG. 35, the external device 1710 may output the connection guide information requesting connection of the air conditioner 100 to the Wi-Fi network of the 5-GHz band. According to an embodiment of the disclosure, the application of the external device 1710 may output other connection guide information according to authority of a user of the external device 1710. The authority of the user of the external device 1710 may be determined based on authority information of an account of the user who logs in the application. For example, when the user of the external device 1710 is an owner of a corresponding space (e.g., a house, a room, an office, etc.), the application of the external device 1710 may output the connection guide information requesting connection of the air conditioner 100 to the Wi-Fi network of the 5-GHz band. The owner of the corresponding space may refer, for example, to a person having setting authority with respect to an AP. For example, in a case where the user of the external device 1710 is not the owner of the corresponding space but is an owner of the air conditioner 100, the application of the external device 1710 may output, to the owner of the corresponding space, the connection guide information requesting connection of the air conditioner 100 to the Wi-Fi network of the 5-GHz band. As the owner of the air conditioner 100 does not have the setting authority with respect to the AP of the corresponding space, the owner of the corresponding space may be requested to change setting of a Wi-Fi network for the AP. For example, in a case where the user of the external device 1710 is not the owner of the corresponding space and is not the owner of the air conditioner 100, the application of the external device 1710 may output the connection guide information indicating to request the owner of the corresponding space to connect air conditioner 100 to the Wi-Fi network of the 5-GHz band.

In operation S3404, when it is determined that the air conditioner 100 is connected to the Wi-Fi network of the 5-GHz band, in operation S3408, the air conditioner 100 may determine whether a quality of a Wi-Fi signal satisfies a preset reference. The quality of the Wi-Fi signal may be determined by determining whether strength of the Wi-Fi signal is within a reference range. The strength of the Wi-Fi signal may be determined by a RSSI value. For at least one of a case in which the RSSI value is greater than a first RSSI reference value, a case in which an amplifier is additionally provided between an AP and the air conditioner 100, or a case in which the RSSI value is less than a second RSSI reference value, it may be determined that quality of a Wi-Fi signal does not satisfy the preset reference. The second RSSI reference value is a value lower than the first RSSI reference value.

When the air conditioner 100 determines that the Wi-Fi signal is not appropriate as it does not satisfy the preset reference, the air conditioner 100 may output signal-inappropriate guide information in operation S3410. The air conditioner 100 may output the signal-inappropriate guide information via the external device 1710 or the output interface 2420.

According to an embodiment of the disclosure, the air conditioner 100 may output the signal-inappropriate guide information via the application of the external device 1710. Referring to S3508 of FIG. 35, when strength of the Wi-Fi signal is strong, the application of the external device 1710 may output signal-inappropriate guide information indicating to check whether a distance between the air conditioner 100 and an AP is excessively small. When strength of the Wi-Fi signal is strong, the application of the external device 1710 may output signal-inappropriate guide information indicating to move the Wi-Fi amplifier when a Wi-Fi amplifier that may cause signal interference is present between the AP and the air conditioner 100. Referring to S3510 of FIG. 35, when strength of the Wi-Fi signal is weak, the application of the external device 1710 may output signal-inappropriate guide information indicating to check whether a distance between the air conditioner 100 and the AP is long or a 5-GHz signal of the AP is excessively weak.

In operation S3408, when the Wi-Fi signal satisfies the preset reference and thus is determined to be appropriate, in operation S3412, the air conditioner 100 may output a notification message indicating activation of a power saving control function. The air conditioner 100 may output the notification message via the external device 1710, or the output interface 2420 of the air conditioner 100.

According to an embodiment of the disclosure, when the air conditioner 100 is connected to the Wi-Fi network of the 5-GHz band and the Wi-Fi signal is appropriate, the application of the external device 1710 may output a notification message indicating activation of the power saving control function as shown in operation S3504. Also, the application of the external device 1710 may output a notification message indicating a motion of a moving subject such as a robot cleaner, a heater, a pet, etc. may be detected as a movement of a person, along with the notification message indicating activation of the power saving control function.

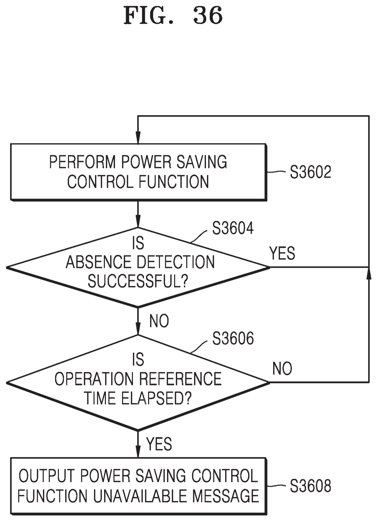

FIG. 36 is a flowchart illustrating an example procedure for outputting a power saving control function unavailable message for a case in which an air conditioner has been performing a power saving control and then cannot perform the power saving control function, according to an embodiment of the disclosure.

According to an embodiment of the disclosure, when the air conditioner 100 performed the power saving control function and failed to perform absence detection for an operation reference time, the air conditioner 100 may determine that it cannot use an absence detection function, and may output a power saving control function unavailable message indicating it is not possible to use the power saving control function.

In operation S3602, the air conditioner 100 may perform the power saving control function.

In operation S3604, the air conditioner 100 may determine whether it has succeeded in absence detection. When it has succeeded in absence detection, the air conditioner 100 continuously performs the power saving control function.

When it has failed in absence detection, the air conditioner 100 may determine whether an operation reference time has elapsed after last success in absence detection. When the air conditioner 100 has never succeeded in absence detection after the air conditioner 100 started operating (e.g., after power is turned on), the air conditioner 100 may determine whether an operation reference time has elapsed after the air conditioner 100 started operating. For example, the operation reference time may be set to be between 24 hours to 40 hours. For example, the operation reference time may be set to be 34 hours.

In operation S3606, when it is determined that the operation reference time has not elapsed, the air conditioner 100 continuously performs the power saving control function.

In operation S3606, when it is determined that the operation reference time has elapsed, in operation S3608, the air conditioner 100 may output a power saving control function unavailable message indicating it is not possible to use the power saving control function. The air conditioner 100 may output the power saving control function unavailable message via the output interface 2420 or the application of the external device 1710.

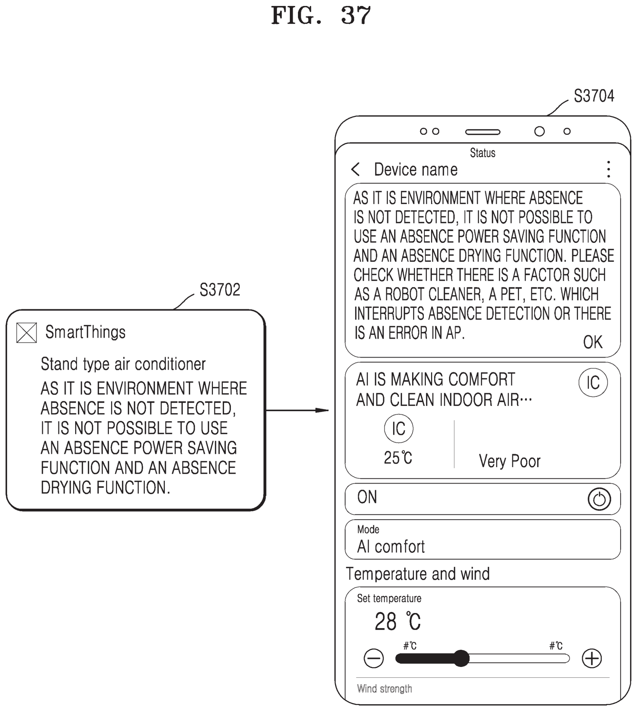

FIG. 37 is a diagram GUI of outputting a power saving control function unavailable message, according to an embodiment of the disclosure.

According to an embodiment of the disclosure, the application of the external device 1710 may output a power saving control function unavailable message. In operation S3702, the application of the external device 1710 may output a pop-up message indicating that, as it is an environment in which absence is not detected, it is not possible to use an absence power saving function and a power saving control function. When a user selects the pop-up message or executes the application, in operation S3704, the application of the external device 1710 may output the power saving control function unavailable message indicating that, as it is an environment in which absence is not detected, it is not possible to use an absence power saving function and a power saving control function. The application of the external device 1710 may output a message indicating to check whether there is an absence detection interruption factor such as a robot cleaner, a pet, etc., or whether an AP has an error.

A machine-readable storage medium may be provided in the form of a non-transitory storage medium. The "non-transitory storage medium" is a tangible entity and may not include a signal (e.g., an electromagnetic wave), and the term does not distinguish that data is stored semi-permanently or temporarily on the storage medium. For example, the "non-transitory storage medium" may include a buffer in which data is temporarily stored.

According to an embodiment of the disclosure, the method according to various embodiments disclosed in the present disclosure may be provided in a computer program product. The computer program product may be traded between a seller and a purchaser as a commodity. The computer program product may be distributed in the form of the machine-readable storage medium (e.g., a compact disc read only memory (CD-ROM)), or may be distributed online (e.g., downloaded or uploaded) through an application store or directly between two user devices (e.g., smart phones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

An embodiment of the disclosure is provided to increase a power consumption decrease effect while minimizing/reducing inconvenience of a user, by adjusting a duration time of power saving control according to an absence time pattern of the user.

According to an embodiment of the disclosure, there is an effect of increasing a power consumption decrease effect while minimizing/reducing inconvenience of a user, by adjusting a duration time of power saving control according to an absence time pattern of the user.

According to an aspect of an embodiment of the disclosure, an air conditioner is provided. The air conditioner includes: a detection sensor ; an air conditioning module configured to perform an air conditioning operation on a target space; a memory storing at least one instruction; at least one processor, comprising processing circuitry, individually and/or collectively configured to: execute the at least one instruction to detect a person in the target space using a sensor detection value of the detection sensor, and perform a power saving control operation to adjust at least one of wind strength or a set temperature of the air conditioning module, according to a power saving performing condition indicating a condition to perform a power saving control operation being satisfied, based on an absence time during which it is determined that a person is absent in the target space, and in the power saving control operation, set one power saving learning level from among a plurality of power saving learning levels, according to a performance history of a plurality of intermediate operation stages of the power saving control operation, adjust respective duration times of the plurality of intermediate operation stages, according to the set power saving learning level, and adjust at least one of the wind strength or the set temperature while the plurality of intermediate operation stages are being performed according to the absence time.

According to an embodiment of the disclosure, the plurality of power saving learning levels may include a basic level, a first learning level, a second learning level, and a third learning level. The at least one processor, individually and/or collectively, may be configured to execute the at least one instruction to operate at one power saving learning level from among the plurality of power saving learning levels, according to the performance history of the plurality of intermediate operation stages.

According to an embodiment of the disclosure, the at least one processor, individually and/or collectively, may be configured to execute the at least one instruction to perform a preliminary determination stage for determining whether to perform power saving control. The preliminary determination stage may be a stage in which it is determined to perform the power saving control based on the absence time reaching a duration time of the preliminary determination stage while the set temperature and the wind strength of the air conditioning module are maintained. The duration time of the preliminary determination stage may be longer than the respective duration times of the plurality of intermediate operation stages.

According to an embodiment of the disclosure, the plurality of intermediate operation stages may include an absence wind-free stage, a first absence power-saving stage, and a second absence power-saving stage. The plurality of intermediate operation stages may be performed in order of the absence wind-free stage, the first absence power-saving stage, and the second absence power-saving stage, according to an elapse of the duration time. The absence wind-free stage may include setting the air conditioning module to a wind-free mode, and maintaining the set temperature. The first absence power-saving stage may include increasing the set temperature by a first reference level. The second absence power-saving stage may include additionally increasing the set temperature by a second reference level.

According to an embodiment of the disclosure, the power saving control may include a soft off stage. The soft off stage may be performed after the plurality of intermediate operation stages, and may include activating the detection sensor, and stopping an operation of the air conditioning module.

According to an embodiment of the disclosure, the at least one processor, individually and/or collectively, may be configured to execute the at least one instruction to, based on the air conditioner being maintained in a soft off state for a specified duration time, operate by switching to a level at which respective duration times of a plurality of intermediate operation stages are short, from among the plurality of power saving learning levels.

According to an embodiment of the disclosure, the at least one processor, individually and/or collectively, may be configured to execute the at least one instruction to, based on detecting a person in the soft off state, stop the power saving control and operate by switching to a level at which respective duration times of a plurality of intermediate operation stages are long, from among the plurality of power saving learning levels.

According to an embodiment of the disclosure, the duration time of the preliminary determination stage may be equal in all the plurality of power saving learning levels. The respective duration times of the plurality of intermediate operation stages may vary according to the plurality of power saving learning levels.

According to an embodiment of the disclosure, the duration time of the preliminary determination stage may be longer than each of the respective duration times of the plurality of intermediate operation stages. The respective duration times of the plurality of intermediate operation stages may be equal to each other.

According to an embodiment of the disclosure, the at least one processor, individually and/or collectively, may be configured to execute the at least one instruction to set a mode of the power saving control operation to be one of a plurality of user-designated modes, based on a user input, and the respective duration times of the plurality of intermediate operation stages with respect to the plurality of power saving learning levels vary, according to the plurality of user-designated modes.

According to an embodiment of the disclosure, in the plurality of intermediate operation stages, at least one of wind strength or a set temperature of the air conditioning module may be differently set.

According to an embodiment of the disclosure, the at least one processor, individually and/or collectively, may be configured to execute the at least one instruction to increase a set temperature of the air conditioning module in at least one intermediate operation stage while the plurality of intermediate operation stages are sequentially performed, and based on the set temperature of the air conditioning module reaching a maximum reference temperature while the plurality of intermediate operation stages are sequentially performed, maintain the setting temperate at the maximum reference temperature without increasing the set temperature.

According to an embodiment of the disclosure, the at least one processor, individually and/or collectively, may be configured to execute the at least one instruction to obtain daily average use time information, and based on the daily average use time information, based on a daily average use time being less than a reference use time, select a power saving learning level of which duration time is shorter than a level determined according to the performance history of the plurality of intermediate operation stages, from among the plurality of power saving learning levels.

According to an embodiment of the disclosure, the at least one processor, individually and/or collectively, may be configured to execute the at least one instruction to obtain absence schedule information set by a user, and based on the absence schedule information, based on a time to perform the power saving control operation being a time corresponding to the absence schedule information, select a power saving learning level of which duration time is shorter than a level determined according to the performance history of the plurality of intermediate operation stages, from among the plurality of power saving learning levels.

According to an embodiment of the disclosure, the at least one processor, individually and/or collectively, may be configured to execute the at least one instruction to perform a preliminary determination stage for determining whether to perform the power saving control operation, obtain absence schedule information set by a user, and based on the absence schedule information, based on a time to perform the power saving control operation being a time corresponding to the absence schedule information, not perform the preliminary determination stage and perform the plurality of intermediate operation stages, and in the preliminary determination stage, a set temperature and wind strength of the air conditioning module are maintained, and based on the absence time reaching the duration time of the preliminary determination stage, it being determined to perform the power saving control operation.

According to an embodiment of the disclosure, the air conditioner may further include the communication module comprising communication circuitry. The at least one processor, individually and/or collectively, may be configured to execute the at least one instruction to receive, from an external device including an external detection sensor via the communication module, a sensor detection value or a person detection result of the external detection sensor, and based on the sensor detection value or the person detection result of the external detection sensor, detect a person from the target space.

According to an embodiment of the disclosure, the at least one processor, individually and/or collectively, may be configured to execute the at least one instruction to, based on a person being detected from the target space, increase sensitivity of an operation of detecting a person from the target space, by increasing sensitivity of the detection sensor or by adjusting a reference value of detecting a person using the sensor detection value.

According to an embodiment of the disclosure, the air conditioner may correspond to at least one of a cooler, a heater, an air purifier, or a dehumidifier.

According to an embodiment of the disclosure, the air conditioner may further include the Wi-Fi module including Wi-Fi circuitry, and at least one processor, individually and/or collectively, may be configured to detect a person from the target space using a CSI value of a Wi-Fi signal received via the Wi-Fi module.

According to an embodiment of the disclosure, the at least one processor, individually and/or collectively, may be configured to execute the at least one instruction to determine that a person is present in the target space based on the CSI value being equal to or greater than a CSI reference value, and may be configured to determine that a person is absent in the target space based on the CSI value being less than the CSI reference value.

According to an embodiment of the disclosure, the at least one processor, individually and/or collectively, may be configured to execute the at least one instruction to generate a first message indicating that motion detect using a Wi-Fi signal cannot be performed, based on the Wi-Fi signal received by the Wi-Fi module from an AP not using a Wi-Fi network within a first frequency band or based on a quality of the Wi-Fi signal not satisfying a specified reference, and transmit the first message to a server via the Wi-Fi module.

According to an embodiment of the disclosure, the air conditioner may further include the output interface including circuitry, and at least one processor, individually and/or collectively, may be configured to
generate a first message indicating that motion detect using a Wi-Fi signal cannot be performed, based on the Wi-Fi signal received by the Wi-Fi module from an AP not using a Wi-Fi network within a first frequency band or based on a quality of the Wi-Fi signal not satisfying a specified reference, and output the first message via the output interface.

According to an embodiment of the disclosure, a method of controlling an air conditioner is provided. The method includes: detecting a person in a target space using a sensor detection value of a detection sensor; performing a power saving control operation to adjust at least one of wind strength or a set temperature of an air conditioning module, according to a power saving performing condition indicating a condition to perform a power saving control operation being satisfied, based on an absence time during which it is determined that a person is absent in the target space; setting one power saving learning level from among a plurality of power saving learning levels, according to a performance history of a plurality of intermediate operation stages of the power saving control operation, adjusting respective duration times of the plurality of intermediate operation stages, according to the set power saving learning level, and adjusting at least one of the wind strength or the set temperature while the plurality of intermediate operation stages are being performed, according to the absence time.

According to an embodiment of the disclosure, provided is a non-transitory computer-readable recording medium having recorded thereon a program for performing the method, on a computer.

## Claims

1. An air conditioner (100) comprising:
a detection sensor (110);
an air conditioning module (212) configured to perform an air conditioning operation on a target space;
a memory (214) storing at least one instruction; and
at least one processor (210) comprising processing circuitry,
wherein the at least one processor (210), individually and/or collectively, is configured to execute the at least one instruction to:
detect a person in the target space using a sensor detection value of the detection sensor (110), and
perform a power saving control operation to adjust at least one of wind strength or a set temperature of the air conditioning module (212), according to a power saving performing condition indicating a condition to perform a power saving control operation being satisfied, based on an absence time during which it is determined that a person is absent in the target space, and
in the power saving control operation,
set one power saving learning level from among a plurality of power saving learning levels, according to a performance history of a plurality of intermediate operation stages of the power saving control operation,
adjust respective duration times of the plurality of intermediate operation stages, according to the set power saving learning level, and
adjust at least one of the wind strength or the set temperature while the plurality of intermediate operation stages are being performed, according to the absence time.

2. The air conditioner (100) of claim 1, wherein
the plurality of power saving learning levels comprise: a basic level, a first learning level, a second learning level, and a third learning level, and
the at least one processor (210), individually and/or collectively, is further configured to execute the at least one instruction to operate at one power saving learning level from among the plurality of power saving learning levels, according to the performance history of the plurality of intermediate operation stages.

3. The air conditioner (100) of any one of claims 1 and 2, wherein
the at least one processor (210), individually and/or collectively, is further configured to execute the at least one instruction to:
perform a preliminary determination stage to determine whether to perform power saving control, and
in the preliminary determination stage, determine to perform the power saving control based on the absence time reaching a duration time of the preliminary determination stage while the set temperature and the wind strength of the air conditioning module are maintained, and
the duration time of the preliminary determination stage is longer than the respective duration times of the plurality of intermediate operation stages.

4. The air conditioner (100) of any one of claims 1 to 3, wherein
the plurality of intermediate operation stages comprise an absence wind-free stage, a first absence power-saving stage, and a second absence power-saving stage,
the plurality of intermediate operation stages are performed in order of the absence wind-free stage, the first absence power-saving stage, and the second absence power-saving stage, according to an elapse of the duration time,
the absence wind-free stage comprises setting the air conditioning module to a wind-free mode, and maintaining the set temperature,
the first absence power-saving stage comprises increasing the set temperature by a first reference level, and
the second absence power-saving stage comprises additionally increasing the set temperature by a second reference level.

5. The air conditioner (100) of claim 4, wherein
the power saving control comprises a soft off stage performed after the plurality of intermediate operation stages, and
the at least one processor (210), individually and/or collectively, is further configured to execute the at least one instruction to, in the soft off stage, activate the detection sensor (110), and stop an operation of the air conditioning module (212).

6. The air conditioner (100) of claim 5, wherein the at least one processor (210), individually and/or collectively, is further configured to execute the at least one instruction to, based on the air conditioner (100) being maintained in a soft off state for a specified duration time, operate by switching to a level at which respective duration times of the plurality of intermediate operation stages are short, from among the plurality of power saving learning levels.

7. The air conditioner (100) of claim 5, wherein the at least one processor (210), individually and/or collectively, is further configured to execute the at least one instruction to, based on detecting a person in the soft off stage, stop the power saving control and operate by switching to a level at which respective duration times of the plurality of intermediate operation stages are long, from among the plurality of power saving learning levels.

8. The air conditioner (100) of claim 3, wherein
the duration time of the preliminary determination stage is equal in all the plurality of power saving learning levels, and
the respective duration times of the plurality of intermediate operation stages vary according to the plurality of power saving learning levels.

9. The air conditioner (100) of claim 3, wherein
the duration time of the preliminary determination stage is longer than each of the respective duration times of the plurality of intermediate operation stages, and
the respective duration times of the plurality of intermediate operation stages are equal to each other.

10. The air conditioner (100) of any one of claims 1 to 9, wherein
the at least one processor (210), individually and/or collectively, is further configured to execute the at least one instruction to set a mode of the power saving control operation to be one of a plurality of user-designated modes, based on a user input, and
the respective duration times of the plurality of intermediate operation stages with respect to the plurality of power saving learning levels vary, according to the plurality of user-designated modes.

11. The air conditioner (100) of any one of claims 1 to 10, wherein, in the plurality of intermediate operation stages, at least one of wind strength or a set temperature of the air conditioning module (212) is differently set.

12. The air conditioner (100) of claim 11, wherein the at least one processor (210), individually and/or collectively, is further configured to execute the at least one instruction to
increase a set temperature of the air conditioning module (212) in at least one intermediate operation stage based on the plurality of intermediate operation stages being sequentially performed, and
based on the set temperature of the air conditioning module (212) reaching a maximum reference temperature based on the plurality of intermediate operation stages being sequentially performed, maintain the setting temperate at the maximum reference temperature.

13. The air conditioner (100) of any one of claims 1 to 12, wherein the at least one processor (210), individually and/or collectively, is furtherconfigured to execute the at least one instruction to
obtain daily average use time information indicating a time during which the air conditioner (100) is used on average per day, and
based on the daily average use time information, based on a daily average use time being less than a reference use time, select a power saving learning level of which duration time is shorter than a level determined according to the performance history of the plurality of intermediate operation stages, from among the plurality of power saving learning levels.

14. The air conditioner (100) of any one of claims 1 to 13, wherein the at least one processor (210), individually and/or collectively, is further configured to execute the at least one instruction to
obtain absence schedule information set by a user, the absence schedule information indicating a schedule in which the user is absent, and
based on the absence schedule information, based on a time to perform the power saving control operation being a time corresponding to the absence schedule information, select a power saving learning level of which duration time is shorter than a level determined according to the performance history of the plurality of intermediate operation stages, from among the plurality of power saving learning levels.

15. The air conditioner of any one of claims 1 to 14, wherein
the at least one processor (210), individually and/or collectively, is further configured to execute the at least one instruction to
perform a preliminary determination stage to determine whether to perform the power saving control operation,
obtain absence schedule information set by a user, the absence schedule information indicating a schedule in which the user is absent, and
based on the absence schedule information, based on a time to perform the power saving control operation being a time corresponding to the absence schedule information, not perform the preliminary determination stage and perform the plurality of intermediate operation stages, and
in the preliminary determination stage, a set temperature and wind strength of the air conditioning module (212)are maintained, and based on the absence time reaching the duration time of the preliminary determination stage, determining to perform the power saving control operation.

16. The air conditioner (100) of any one of claims 1 to 15, further comprising:
a communication module (1620) comprising communication circuitry, and
wherein the at least one processor (210), individually and/or collectively, is further configured to execute the at least one instruction to
receive, from an external device comprising an external detection sensor (2010) via the communication module (1620), a sensor detection value or a person detection result of the external detection sensor (2010), and
based on the sensor detection value or the person detection result of the external detection sensor (2010), detect a person from the target space.

17. The air conditioner (100) of any one of claims 1 to 16, wherein the at least one processor (210), individually and/or collectively, is further configured to execute the at least one instruction to, based on a person being detected from the target space, increase sensitivity of an operation of detecting a person from the target space, by increasing sensitivity of the detection sensor (110) or by adjusting a reference value of detecting a person using the sensor detection value.

18. The air conditioner (100) of any one of claims 1 to 17, wherein the air conditioner (100) comprises at least one of a cooler, a heater, an air purifier, or a dehumidifier.

19. The air conditioner (100) of any one of claims 1 to 18, further comprising a Wi-Fi module (2410)comprising Wi-Fi circuitry, and
wherein the at least one processor (210), individually and/or collectively, is further configured to execute the at least one instruction to detect a person from the target space using a channel state information (CSI) value of a Wi-Fi signal received via the Wi-Fi module (2410).

20. The air conditioner (100) of claim19, wherein the at least one processor (210), individually and/or collectively, is further configured to execute the at least one instruction to determine that a person is present in the target space based on the CSI value being equal to or greater than a CSI reference value, and to determine that a person is absent in the target space based on the CSI value being less than the CSI reference value.

21. The air conditioner (100) of claim 19, wherein the at least one processor (210), individually and/or collectively, is further configured to execute the at least one instruction to
generate a first message indicating that motion detect using a Wi-Fi signal cannot be performed, based on the Wi-Fi signal received by the Wi-Fi module from an access point (AP) not using a Wi-Fi network within a first frequency band or based on a quality of the Wi-Fi signal not satisfying a specified reference, and
transmit the first message to a server via the Wi-Fi module.

22. The air conditioner (100) of claim 19, further comprising
an output interface (2420) comprising output circuitry, and
wherein the at least one processor (210), individually and/or collectively, is further configured to execute the at least one instruction to
generate a first message indicating that motion detect using a Wi-Fi signal cannot be performed, based on the Wi-Fi signal received by the Wi-Fi module (2410) from an AP not using a Wi-Fi network within a first frequency band or based on a quality of the Wi-Fi signal not satisfying a specified reference, and
output the first message via the output interface (2420).

23. A method of controlling an air conditioner, the method comprising:
detecting a person in a target space using a sensor detection value of a detection sensor; and
performing a power saving control operation to adjust at least one of wind strength or a set temperature of an air conditioning module, according to a power saving performing condition indicating a condition to perform a power saving control operation being satisfied, based on an absence time during which it is determined that a person is absent in the target space,
wherein the performing of the power saving control operation comprises:
setting one power saving learning level from among a plurality of power saving learning levels, according to a performance history of a plurality of intermediate operation stages of the power saving control operation;
adjusting respective duration times of the plurality of intermediate operation stages, according to the set power saving learning level; and
adjusting at least one of the wind strength or the set temperature while the plurality of intermediate operation stages are being performed, according to the absence time.

24. A computer-readable recording medium having recorded thereon a program for performing the method of claim 23, on a computer.
